# EUROPEAN PATENT APPLICATION

(11) **EP 4 765 913 A1**
(43) Date of publication of application: **24.06.2026**
(21) Application number: 24870361.3
(22) Date of filing: 03.09.2024
(51) Int. Cl.: H04W 12/06

(54) **COMMUNICATION METHOD, APPARATUS AND SYSTEM**

(30) Priority: 26.09.2023 CN 202311252870
(71) Applicant: HUAWEI TECHNOLOGIES CO., LTD., Shenzhen, Guangdong 518129 (CN)
(72) Inventor: ZONG, Zaifeng, Shenzhen, Guangdong 518129 (CN); YIN, Yu, Shenzhen, Guangdong 518129 (CN); DING, Hui, Shenzhen, Guangdong 518129 (CN); ZHANG, Xinyi, Shenzhen, Guangdong 518129 (CN)
(74) Representative: Goddar, Heinz J.
(86) International application number: PCT/CN2024/116653
(87) International publication number: WO 2025/066815

(57) **Abstract**

This application provides a communication method, apparatus, and system. The method includes: A second network element receives a first request message from a first network element in a first network; sends a second request message to a third network element in a second network based on the first request message; receives a first response message from the third network element; and sends a second response message to the first network element based on the first response message, where the first request message is for requesting establishment of a connection between a terminal device and the second network, the second network is for providing a service for the terminal device, and the connection between the terminal device and the second network is used by the terminal device and the second network to perform transmission of data of the service through the first network. According to the foregoing method, the second network can autonomously control and manage the establishment of the connection between the terminal device and the second network, to reduce complexity of deployment and maintenance of the second network.

## Description

### CROSS-REFERENCE TO RELATED APPLICATIONS

This application claims priority to Chinese Patent Application No. 202311252870.3, filed with the China National Intellectual Property Administration on September 26, 2023 and entitled "COMMUNICATION METHOD, APPARATUS, AND SYSTEM", which is incorporated herein by reference in its entirety.

### TECHNICAL FIELD

This application relates to the communication field, and more specifically, to a communication method, apparatus, and system.

### BACKGROUND

As a 3rd generation partnership project (3rd generation partnership project, 3GPP) network develops from being to business (to business, 2B) toward being to consumer (to consumer, 2C), technologies such as slicing, multi-access edge computing (multi-access edge computing, MEC), and local area data network (local area data network, LADN) emerge, to support deployment of sub-networks in specified location areas (for example, enterprises, campuses, shopping malls, or parks), and provide customized sub-network services for users in these areas.

However, when the sub-networks are deployed by using the slicing, MEC, and LADN technologies, permission to establish connections between terminal devices and the sub-networks are controlled by a public land mobile network (public land mobile network, PLMN), making deployment and maintenance of the sub-networks quite complex.

### SUMMARY

Embodiments of this application provide a communication method, apparatus, and system, so that a sub-network autonomously manages establishment of a connection between a terminal device and the sub-network, to reduce complexity of deployment and maintenance of the sub-network.

According to a first aspect, a communication method is provided. The method may be performed by a second network element, or may be performed by a chip or a circuit in the second network element. This is not limited in this application. For ease of description, the following provides descriptions by using an example in which the method is performed by the second network element.

The method includes: receiving a first request message from a first network element in a first network; sending a second request message to a third network element in a second network based on the first request message; receiving a first response message from the third network element; and sending a second response message to the first network element based on the first response message.

For example, the first network is a macro operator network, for example, a PLMN, and may also be referred to as a macro network or a public network; and the second network is a sub-network, and may also be referred to as a private network or a dedicated network. The first network element is a control plane network element in the macro operator network, for example, a session management network element or a mobility management network element. The second network element may be configured to serve or manage the second network, or may be configured to forward a message between the first network and the second network. For example, the second network element is a sub-network agent (sub-network agent, SNA) network element, and is configured to serve or manage one or more sub-networks. The third network element is a control plane network element in the sub-network. For example, the third network element is a sub-network session management network element.

The first request message may be for requesting establishment of a connection between a terminal device and the second network, or may be for requesting access of the terminal device to the second network.

The second network is for providing a service for the terminal device, and the service provided by the second network for the terminal device may be referred to as a sub-network service.

The connection between the terminal device and the second network may be referred to as a sub-network connection of the terminal device, and is used by the terminal device and the second network to perform transmission of data of the service through the first network.

The second request message may be for requesting the establishment of the connection between the terminal device and the second network, or may be for requesting the access of the terminal device to the second network.

The first response message indicates whether the establishment of the connection between the terminal device and the second network is accepted, and the second response message indicates whether the establishment of the connection between the terminal device and the second network is accepted.

For example, the sending the second response message to the first network element based on the first response message may be: When the first response message indicates that the establishment of the connection is accepted, the second network element sends the second response message to the first network element, where the second response message indicates that the establishment of the connection is accepted. In this implementation, the first response message and the second response message may further indicate that establishment of the sub-network connection of the terminal device succeeds, indicate that an access request of the terminal device is accepted, indicate that the access of the terminal device succeeds, or indicate that the establishment of the sub-network connection of the terminal device is accepted.

For example, the sending the second response message to the first network element based on the first response message may alternatively be: When the first response message indicates that the establishment of the connection is not accepted, the second network element sends the second response message to the first network element, where the second response message indicates that the establishment of the connection is not accepted. In this implementation, the first response message and the second response message may further be used for rejecting the establishment of the connection between the terminal device and the second network, indicate that the establishment of the connection between the terminal device and the second network fails, indicate that an access request of the terminal device is rejected, indicate that the access of the terminal device fails, or indicate that the establishment of the sub-network connection of the terminal device is rejected.

According to the solution provided in this application, the second network element sends, to the third network element in the second network, a message for requesting the establishment of the connection between the terminal device and the second network, so that the third network element determines whether to accept the establishment of the connection. In this way, the second network (namely, the sub-network) autonomously controls the establishment of the connection, to reduce complexity of deployment and maintenance of the sub-network.

With reference to the first aspect, in some implementations of the first aspect, the first request message includes identification information of the terminal device, and the sending the second request message to the third network element based on the first request message may be: when user information of the second network includes the identification information of the terminal device, sending the second request message to the third network element, where the user information of the second network includes identification information of one or more terminal devices allowed to establish a connection with the second network. In other words, the user information of the second network includes identification information of one or more terminal devices that subscribe to the second network.

For example, the second network element obtains the user information of the second network, and determines whether the user information of the second network includes the identification information of the terminal device. For example, the second network element obtains the user information of the second network from a fourth network element. The fourth network element may be a sub-network tenant subscription function network element.

When the user information of the second network includes the identification information of the terminal device, the second network element sends the second request message to the third network element. In this way, a case in which a terminal device that is not allowed to establish a connection with the second network or a terminal device that does not subscribe to the second network initiates a connection establishment request to the third network element can be avoided, so that unnecessary signaling overheads are avoided, transmission resource utilization is improved, processing complexity of the third network element is reduced, and management and control of the second network element on the establishment of the sub-network connection is implemented.

With reference to the first aspect, in some implementations of the first aspect, when the user information of the second network includes the identification information of the terminal device, the method further includes: obtaining subscription data of the second network. For example, the second network element receives the subscription data of the second network from the fourth network element. In this way, a case in which the second network element unnecessarily obtains the subscription data of the second network can be avoided, to improve the resource utilization, and reduce the signaling overheads.

With reference to the first aspect, in some implementations of the first aspect, the sending the second request message to the third network element in the second network based on the first request message may be: when the first request message and the subscription data of the second network satisfy a first condition, sending the second request message to the third network element, where the first condition includes one or two of the following conditions:
(1) When the first request message includes identification information of the first network, and the subscription data of the second network includes identification information of one or more networks, the identification information of the one or more networks includes the identification information of the first network; and
(2) when the first request message includes information indicating a location of the terminal device, and the subscription data of the second network includes a service range of the second network, the service range of the second network includes the location of the terminal device.

The subscription data of the second network includes an identifier of the one or more networks, and may indicate that the terminal device may access the second network through the one or more networks, or may indicate that a terminal device whose serving operator network is the one or more networks may access the second network.

In this way, the second network element manages and controls a sub-network connection establishment request of the terminal device, and sends the second request message to the third network element only when the first condition is satisfied. This can avoid a case in which a terminal device that does not satisfy a requirement initiates a connection establishment request to the third network element, thereby avoiding the unnecessary signaling overheads.

With reference to the first aspect, in some implementations of the first aspect, before the sending the second request message to the third network element in the second network based on the first request message, the method further includes: obtaining a quantity of terminal devices that have accessed the second network; and determining that the quantity of terminal devices that have accessed the second network is less than a maximum quantity of terminal devices allowed to simultaneously access the second network. In this way, overload of the second network can be avoided, to ensure network performance of the second network.

For example, the second network element receives, from the fourth network element, the quantity of terminal devices that have accessed the second network. The fourth network element is configured to maintain the quantity of terminal devices that have accessed the second network, and the fourth network element may be the sub-network tenant subscription function network element.

With reference to the first aspect, in some implementations of the first aspect, when the quantity of terminal devices that have accessed the second network is less than the maximum quantity of terminal devices allowed to simultaneously access the second network, the method further includes: sending, to a fourth network element, a message for requesting to update the quantity of terminal devices that have accessed the second network, where the fourth network element is configured to maintain the quantity of terminal devices that have accessed the second network. In this way, it can be ensured that the fourth network element updates, in time, the quantity of terminal devices that have accessed the second network.

With reference to the first aspect, in some implementations of the first aspect, before the sending the second request message to the third network element in the second network based on the first request message, the method further includes: determining that the quantity of terminal devices that have accessed the second network is successfully updated.

For example, the second network element receives an update response message from the fourth network element, where the update response message indicates that the quantity of terminal devices that have accessed the second network is successfully updated.

With reference to the first aspect, in some implementations of the first aspect, the second response message includes a quality of service parameter corresponding to the sub-network connection of the terminal device, and the quality of service parameter of the sub-network connection is determined based on at least one of the following: a quality of service parameter of the terminal device or a quality of service parameter of the second network.

With reference to the first aspect, in some implementations of the first aspect, the first response message includes the quality of service parameter of the terminal device, and the subscription data of the second network includes the quality of service parameter of the second network; and when the quality of service parameter of the terminal device and the quality of service parameter of the second network satisfy a second condition, the quality of service parameter of the sub-network connection is the quality of service parameter of the terminal device; or when the quality of service parameter of the terminal device and the quality of service parameter of the second network do not satisfy a second condition, the quality of service parameter of the sub-network connection is the quality of service parameter of the second network, where
the second condition includes one or two of the following conditions:
(1) A quality of service level in the quality of service parameter of the terminal device is less than or equal to a quality of service level in the quality of service parameter of the second network; and
(2) a maximum bandwidth in the quality of service parameter of the terminal device is less than or equal to a maximum bandwidth in the quality of service parameter of the second network.

In the foregoing solution, the second network element better determines, based on the quality of service parameter of the terminal device and the quality of service parameter of the second network, the quality of service parameter corresponding to the sub-network connection of the terminal device, so that a quality of service requirement of the terminal device can be satisfied as much as possible when quality of service that can be provided by the second network is satisfied.

Optionally, when the quality of service parameter of the terminal device and the quality of service parameter of the second network do not satisfy the second condition, the second network element sends the second response message to the first network element, where the second response message indicates that the establishment of the sub-network connection of the terminal device is not accepted.

With reference to the first aspect, in some implementations of the first aspect, the second response message includes a charging identifier, the charging identifier indicates to charge a radio resource in the first network, and the radio resource in the first network is for forwarding the service data for the second network.

With reference to the first aspect, in some implementations of the first aspect, the second response message includes radio resource information, and the radio resource information indicates a radio resource that is in the first network and that is for forwarding the data of the service between the terminal device and the second network. That is, the radio resource is used by the first network to support the connection between the terminal device and the second network, and the radio resource is used by the first network to forward the sub-network service data between the terminal device and the second network.

The radio resource message may be determined based on the subscription data of the second network. For example, the radio resource message is determined based on radio resource reservation information of the first network.

With reference to the first aspect, in some implementations of the first aspect, the first request message includes first tunnel information, and the first tunnel information is for sending downlink data of the service to a first user plane network element in the first network.

With reference to the first aspect, in some implementations of the first aspect, the second request message includes the first tunnel information.

With reference to the first aspect, in some implementations of the first aspect, the first response message includes second tunnel information, and the second tunnel information is for sending uplink data of the service to a second user plane network element in the second network.

With reference to the first aspect, in some implementations of the first aspect, the second response message includes the second tunnel information.

With reference to the first aspect, in some implementations of the first aspect, before the sending the second request message to the third network element in the second network based on the first request message, the method further includes: obtaining address information of the third network element.

For example, the second network element obtains the address information of the third network element from locally maintained data, the second network element receives the address information of the third network element from the fourth network element, or the second network element receives the address information of the third network element sent by a domain name server (domain name server, DNS).

According to a second aspect, a communication method is provided. The method may be performed by a third network element, or may be performed by a chip or a circuit in the third network element. This is not limited in this application. For ease of description, the following provides descriptions by using an example in which the method is performed by the third network element.

The method includes: receiving a second request message from a second network element, where the second request message is for requesting establishment of a connection between a terminal device and a second network, the second network is for providing a service for the terminal device, and the connection between the terminal device and the second network is used by the terminal device and the second network to perform transmission of data of the service through a first network; determining, based on the second request message and subscription data of the terminal device, whether to accept the establishment of the connection between the terminal device and the second network; and sending a first response message to the second network element, where the first response message indicates whether the establishment of the connection between the terminal device and the second network is accepted.

The second request message may alternatively be for requesting access of the terminal device to the second network.

For example, the first network is a macro operator network, for example, a PLMN, and may also be referred to as a macro network or a public network; and the second network is a sub-network, and may also be referred to as a private network or a dedicated network. A first network element is a control plane network element in the macro operator network, for example, a session management network element or a mobility management network element. The second network element may be configured to serve or manage the second network, or may be configured to forward a message between the first network and the second network. For example, the second network element is a sub-network agent (sub-network agent, SNA) network element, and is configured to serve or manage one or more sub-networks. The third network element is a control plane network element in the sub-network. For example, the third network element is a sub-network session management network element.

The service provided by the second network for the terminal device may be referred to as a sub-network service, and the connection between the terminal device and the second network may be referred to as a sub-network connection of the terminal device.

For example, when determining to accept the establishment of the connection between the terminal device and the second network, the third network element sends the first response message to the second network element, where the first response message may indicate that the establishment of the connection between the terminal device and the second network is accepted, indicate that establishment of the sub-network connection of the terminal device succeeds, indicate that an access request of the terminal device is accepted, indicate that the access of the terminal device succeeds, or indicate that the establishment of the sub-network connection of the terminal device is accepted.

For example, when determining not to accept the establishment of the connection between the terminal device and the second network, the third network element sends the first response message to the second network element, where the first response message may indicate that the establishment of the connection between the terminal device and the second network is rejected, indicate that the establishment of the connection between the terminal device and the second network fails, indicate that an access request of the terminal device is rejected, indicate that the access of the terminal device fails, or indicate that the establishment of the sub-network connection of the terminal device is rejected.

According to the solution provided in this application, the third network element determines, based on the second request message and the subscription data of the terminal device, whether to accept the establishment of the connection between the terminal device and the second network, so that the second network (namely, the sub-network) can autonomously control and manage the establishment of the connection between the terminal device and the second network, to reduce complexity of deployment and maintenance of the second network.

With reference to the second aspect, in some implementations of the second aspect, the subscription data of the terminal device is subscription data created when the terminal device subscribes to the second network. It should be understood that the subscription data of the terminal device may further be updated after being created. Alternatively, the subscription data of the terminal device is default subscription data which may also be referred to as default subscription data. For example, when the terminal device has not subscribed to the second network, and the subscription data of the terminal device is the default subscription data, the third network element determines, based on the second request message and the default subscription data, whether to accept the establishment of the connection between the terminal device and the second network.

With reference to the second aspect, in some implementations of the second aspect, the determining, based on the second request message and the subscription data of the terminal device, whether to accept the establishment of the connection between the terminal device and the second network includes:

when the second request message and the subscription data of the terminal device satisfy a third condition, determining to accept the establishment of the connection between the terminal device and the second network; or when the second request message and the subscription data of the terminal device do not satisfy a third condition, determining not to accept the establishment of the connection between the terminal device and the second network.

The third condition includes one or two of the following conditions:
(1) When the second request message includes information indicating a location of the terminal device, and the subscription data of the terminal device includes information indicating one or more geographic areas that the terminal device is allowed to access, the one or more geographic areas that the terminal device is allowed to access include the location of the terminal device; and
(2) when the second request message includes information indicating a logical zone that the terminal device requests to access, and the subscription data of the terminal device includes information indicating one or more logical zones that the terminal device is allowed to access, the one or more logical zones that the terminal device is allowed to access include the logical zone that the terminal device requests to access.

In this way, a case in which the terminal device accesses a geographic area and/or a logical zone that the terminal device is not allowed to access can be avoided, to ensure security of the second network, and implement autonomous management of the second network on access permission of the terminal device.

With reference to the second aspect, in some implementations of the second aspect, the first response message indicates that the establishment of the connection between the terminal device and the second network is accepted; and before the sending the first response message to the second network element, the method further includes: determining that authentication does not need to be performed on the terminal device.

For example, when one or two of the following conditions are satisfied, the third network element determines that the authentication does not need to be performed on the terminal device:
(1) The subscription data of the terminal device includes information indicating that the authentication does not need to be performed on the terminal device; and
(2) the second request message includes identification information allocated by the first network to the terminal device, and the identification information is trusted.

For example, the second request message includes information indicating that the identification information is trusted, and the third network element determines, based on the information, that the identification information is trusted. For another example, the third network element determines, based on the identification information of the terminal device being at a specific location in the second request message, that the identification information is trusted.

In the foregoing solution, the third network element does not need to perform authentication on the terminal device, so that processing complexity of the third network element can be reduced, and efficiency of the establishment of the connection between the terminal device and the second network can be improved.

With reference to the second aspect, in some implementations of the second aspect, the first response message indicates that the establishment of the connection between the terminal device and the second network is accepted; and before the sending the first response message to the second network element, the method further includes: successfully authenticating the terminal device.

For example, the subscription data of the terminal device includes authentication information of the terminal device, and the third network element performs authentication on the terminal device based on the authentication information. When the authentication succeeds, the third network element sends the first response message to the second network element, where the first response message indicates that the establishment of the connection between the terminal device and the second network is accepted.

In the foregoing solution, after successfully authenticating the terminal device, the third network element accepts the establishment of the connection between the terminal device and the second network, so that access of an unauthorized terminal device to the second network can be avoided, to improve network security.

With reference to the second aspect, in some implementations of the second aspect, the first response message includes a quality of service parameter of the terminal device, and the quality of service parameter of the terminal device is for determining a quality of service parameter corresponding to the connection between the terminal device and the second network.

For example, the third network element determines the quality of service parameter of the terminal device based on the subscription data of the terminal device, and sends the quality of service parameter of the terminal device to the second network element via the first response message.

With reference to the second aspect, in some implementations of the second aspect, before the determining, based on the second request message and the subscription data of the terminal device, whether to accept the establishment of the connection between the terminal device and the second network, the method further includes: obtaining the subscription data of the terminal device. For example, the third network element sends, to a fifth network element in the second network, a message for requesting the subscription data of the terminal device, where the fifth network element is configured to manage subscription data of a terminal device that subscribes to the second network. The third network element receives the subscription data of the terminal device from the fifth network element.

The fifth network element may be a sub-network subscription and policy management network element. The fifth network element is configured to manage subscription data of a subscriber of the second network, and is also configured to manage the default subscription data.

Optionally, the third network element may obtain all subscription data of the terminal device at a time, or may separately obtain different content in the subscription data of the terminal device. For example, the third network element first obtains authentication-related content in the subscription data of the terminal device, for example, authentication indication information and/or the authentication information; and when determining, based on the authentication indication information and/or the authentication information, that the authentication does not need to be performed on the terminal device or successfully authenticating the terminal device, further obtains other content in the subscription data of the terminal device, and determines whether the third condition is satisfied.

With reference to the second aspect, in some implementations of the second aspect, the first response message includes second tunnel information, and the second tunnel information is for sending uplink data of the service to a second user plane network element in the second network.

With reference to the second aspect, in some implementations of the second aspect, before sending the first response message to the second network element based on the second request message and the subscription data of the terminal device, the method further includes: sending indication information to the second user plane network element, where the indication information indicates the second user plane network element to allocate tunnel information to the connection; and receiving the second tunnel information from the second user plane network element.

With reference to the second aspect, in some implementations of the second aspect, first tunnel information is sent to the second user plane network element in the second network, where the first tunnel information is for sending downlink data of the service to a first user plane network element in the first network.

According to a third aspect, a communication method is provided. The method may be performed by a first network element, or may be performed by a chip or a circuit in the first network element. This is not limited in this application. For ease of description, the following provides descriptions by using an example in which the method is performed by the first network element.

The method includes: receiving, from a terminal device, a message for requesting establishment of a connection between the terminal device and a second network, where the second network is for providing a service for the terminal device, and the connection between the terminal device and the second network is used by the terminal device and the second network to perform transmission of data of the service through a first network; sending a first request message to a second network element, where the first request message is for requesting the establishment of the connection; receiving, from the second network element, a message indicating that the establishment of the connection is accepted; and sending a third request message to an access network device in the first network, where the third request message is for requesting to allocate a radio resource to the connection, and the radio resource is for forwarding the data of the service between the terminal device and the second network.

For example, the first network is a macro operator network, for example, a PLMN, and may also be referred to as a macro network or a public network; and the second network is a sub-network, and may also be referred to as a private network or a dedicated network. The first network element is a control plane network element in the macro operator network, for example, a session management network element or a mobility management network element. The second network element may be configured to serve or manage the second network, or may be configured to forward a message between the first network and the second network. For example, the second network element is a sub-network agent (sub-network agent, SNA) network element, and is configured to serve or manage one or more sub-networks.

The first request message may alternatively be for requesting access of the terminal device to the second network. The message for requesting the establishment of the connection between the terminal device and the second network may be referred to as a connection establishment request message.

For example, a third network element is triggered by the first request message to send a second request message to the second network element.

Optionally, the connection establishment request message and the first request message include one or more of the following information: identification information of the terminal device, identification information of the second network, information indicating one or more logical zones that the terminal device requests to access, and information indicating a location of the terminal device.

The identification information of the terminal device may include first identification information allocated by the first network to the terminal device. For example, the first network element receives the first identification information from the terminal device. For example, the connection establishment request message includes the first identification information. For another example, the first network element obtains the first identification information from subscription data of the terminal device. In this implementation, the first identification information may be considered trusted. The first network element may send, at different locations in the first request message, the first identification information received from the terminal device and the first identification information obtained from the subscription data of the terminal device, so that the second network element can determine, based on a location of the first identifier in the first request message, whether the first identification information is trusted. The first network element may alternatively use the first request message to carry information indicating whether the first identification information is trusted, so that the second network element can determine, based on the information, whether the first identification information is trusted.

The identification information of the terminal device may alternatively include second identification information allocated by the second network to the terminal device, namely, a sub-network subscription identifier of the terminal device.

The identification information of the second network indicates the second network. The first network element and the second network element may determine, based on the identification information of the second network, that a network that the terminal device requests to access is the second network.

The one or more logical zones that the terminal device requests to access may be referred to as a target logical zone, and information indicating the target logical zone may be identification information of the target logical zone. For example, the connection establishment request message and the first request message include a first container (container), and the first container includes the information indicating the target logical zone.

The information indicating the location of the terminal device may be user location information (user location information, ULI) of the terminal device, an identity of a cell in which the terminal device is currently located, or a tracking area identity (tracking area identity, TAI).

With reference to the third aspect, in some implementations of the third aspect, before the sending the first request message to the second network element, the method further includes: obtaining address information of the second network element. In this implementation, the sending the first request message to the second network element includes: sending the first request message to the second network element based on the address information of the second network element.

For example, the first network element receives the address information of the second network element from a network function repository function (network function repository function, NRF) network element or a DNS.

With reference to the third aspect, in some implementations of the third aspect, the third request message includes a quality of service parameter corresponding to the connection between the terminal device and the second network, and the quality of service parameter is determined based on a quality of service parameter of the terminal device and/or a quality of service parameter of the second network.

With reference to the third aspect, in some implementations of the third aspect, the third request message includes radio resource information, and the radio resource information is for determining the radio resource.

With reference to the third aspect, in some implementations of the third aspect, the first request message includes first tunnel information, and the first tunnel information is for sending downlink data of the service to a first user plane network element in the first network.

With reference to the third aspect, in some implementations of the third aspect, before the sending the first request message to the second network element, the method further includes: sending, to the first user plane network element, indication information indicating the first user plane network element to allocate downlink tunnel information to the connection; and receiving the first tunnel information from the first user plane network element.

With reference to the third aspect, in some implementations of the third aspect, the third request message includes third tunnel information, and the third tunnel information is for sending uplink data of the service to the first user plane network element in the first network.

With reference to the third aspect, in some implementations of the third aspect, before the first network element sends the third request message to the access network device, the method further includes: sending, to the first user plane network element, indication information indicating the first user plane network element to allocate uplink tunnel information to the connection; and receiving the third tunnel information from the first user plane network element.

With reference to the third aspect, in some implementations of the third aspect, the method further includes: receiving fourth tunnel information from the access network device, where the fourth tunnel information is for sending the downlink data of the service to the access network device.

With reference to the third aspect, in some implementations of the third aspect, the third request message includes indication information indicating the access network device to allocate tunnel information to the connection; and the receiving the fourth tunnel information from the access network device includes: receiving, from the access network device, a message for responding to the third request message, where the message includes the fourth tunnel information.

According to a fourth aspect, a communication apparatus is provided. The apparatus includes one or more functional units, for example, a transceiver unit and a processing unit. The transceiver unit is configured to receive a first request message from a first network element in a first network, where the first request message is for requesting establishment of a connection between a terminal device and a second network, the second network is for providing a service for the terminal device, and the connection between the terminal device and the second network is used by the terminal device and the second network to perform transmission of data of the service through the first network. The processing unit is configured to send a second request message to a third network element in the second network via the transceiver unit based on the first request message, where the second request message is for requesting the establishment of the connection. The transceiver unit is further configured to receive a first response message from the third network element, where the first response message indicates whether the establishment of the connection is accepted. The processing unit is further configured to send a second response message to the first network element via the transceiver unit based on the first response message, where the second response message indicates whether the establishment of the connection is accepted.

The transceiver unit may perform receiving and sending processing in any one of the first aspect and the implementations of the first aspect, and the processing unit may perform processing other than receiving and sending in any one of the first aspect and the implementations of the first aspect.

According to a fifth aspect, a communication apparatus is provided. The apparatus includes one or more functional units, for example, a transceiver unit and a processing unit. The transceiver unit is configured to receive a second request message from a second network element, where the second request message is for requesting establishment of a connection between a terminal device and a second network, the second network is for providing a service for the terminal device, and the connection between the terminal device and the second network is used by the terminal device and the second network to perform transmission of data of the service through a first network. The processing unit is configured to determine, based on the second request message and subscription data of the terminal device, whether to accept the establishment of the connection. The transceiver unit is further configured to send a first response message to the second network element, where the first response message indicates whether the establishment of the connection is accepted.

The transceiver unit may perform receiving and sending processing in any one of the second aspect and the implementations of the second aspect, and the processing unit of the communication apparatus may perform processing other than receiving and sending in any one of the second aspect and the implementations of the second aspect.

According to a sixth aspect, a communication apparatus is provided. The apparatus includes one or more functional units, for example, a transceiver unit and a processing unit. The transceiver unit is configured to receive, from a terminal device, a message for requesting establishment of a connection between the terminal device and a second network, where the second network is for providing a service for the terminal device, and the connection between the terminal device and the second network is used by the terminal device and the second network to perform transmission of data of the service through a first network. The transceiver unit is further configured to send a first request message to a second network element, where the first request message is for requesting the establishment of the connection. The transceiver unit is further configured to receive, from the second network element, a message indicating that the establishment of the connection is accepted. The transceiver unit is further configured to send a third request message to an access network device in the first network, where the third request message is for requesting to allocate a radio resource to the connection, and the radio resource is for forwarding the data of the service between the terminal device and the second network.

The transceiver unit may perform receiving and sending processing in any one of the third aspect and the implementations of the third aspect, and the processing unit of the communication apparatus may perform processing other than receiving and sending in any one of the third aspect and the implementations of the third aspect.

According to a seventh aspect, a communication apparatus is provided, and includes a processor. The processor is coupled to a memory. The memory is configured to store a computer program. The processor is configured to invoke the computer program from the memory and run the computer program, so that the apparatus performs the method in any one of the first aspect to the third aspect and the implementations of the first aspect to the third aspect.

Optionally, there is one or more processors, and there is one or more memories.

Optionally, the memory may be integrated with the processor, or the memory and the processor may be separately disposed.

According to an eighth aspect, a computer-readable storage medium is provided. The computer-readable storage medium stores a computer program or code. When the computer program or the code is run on a computer, the computer is caused to perform the method in any one of the first aspect to the third aspect and the implementations of the first aspect to the third aspect.

According to a ninth aspect, a chip is provided. The chip includes a processor and a communication interface. The processor reads, through the communication interface, instructions stored in a memory, to perform the method in any one of the first aspect to the third aspect and the implementations of the first aspect to the third aspect.

Optionally, in an implementation, the chip may further include the memory. The memory stores the instructions, and the processor is configured to execute the instructions stored in the memory. When the instructions are executed, the processor is configured to perform the method in any one of the first aspect to the third aspect and the implementations of the first aspect to the third aspect.

According to a tenth aspect, a computer program product is provided. The computer program product includes computer program code. When the computer program code is run on a computer, the method in any one of the first aspect to the third aspect and the implementations of the first aspect to the third aspect is performed.

According to an eleventh aspect, a communication system is provided, and includes a second network element and a third network element. The second network element is configured to perform the method in any one of the first aspect and the possible implementations of the first aspect, and the third network element is configured to perform the method in any one of the second aspect and the implementations of the second aspect.

Optionally, the communication system includes a first network element, and the first network element is configured to perform the method in any one of the third aspect and the implementations of the third aspect.

According to a twelfth aspect, a communication method is provided, and includes: A second network element receives a first request message from a first network element in a first network, where the first request message is for requesting establishment of a connection between a terminal device and a second network, the second network is for providing a service for the terminal device, and the connection between the terminal device and the second network is used by the terminal device and the second network to perform transmission of data of the service through the first network. The second network element sends a second request message to a third network element in the second network based on the first request message, where the second request message is for requesting the establishment of the connection. The third network element receives the second request message from the second network element, and determines, based on the second request message and subscription data of the terminal device, whether to accept the establishment of the connection. The third network element sends a first response message to the second network element, where the first response message indicates whether the establishment of the connection is accepted. The second network element receives the first response message from the third network element, and sends a second response message to the first network element based on the first response message, where the second response message indicates whether the establishment of the connection is accepted.

With reference to the twelfth aspect, in some implementations of the twelfth aspect, the first request message includes identification information of the terminal device, and that the second network element sends the second request message to the third network element in the second network based on the first request message includes: When user information of the second network includes the identification information of the terminal device, the second network element sends the second request message to the third network element, where the user information of the second network includes identification information of one or more terminal devices allowed to establish a connection with the second network.

With reference to the twelfth aspect, in some implementations of the twelfth aspect, that the second network element sends the second request message to the third network element in the second network based on the first request message includes: When the first request message and subscription data of the second network satisfy a first condition, the second network element sends the second request message to the third network element, where the first condition includes one or two of the following conditions:
(1) When the first request message includes identification information of the first network, and the subscription data of the second network includes identification information of one or more networks, the identification information of the one or more networks includes the identification information of the first network; and
(2) when the first request message includes information indicating a location of the terminal device, and the subscription data of the second network includes a service range of the second network, the service range of the second network includes the location of the terminal device.

With reference to the twelfth aspect, in some implementations of the twelfth aspect, before the second network element sends the second request message to the third network element in the second network based on the first request message, the method further includes: The second network element obtains a quantity of terminal devices that have accessed the second network. The second network element determines that the quantity of terminal devices that have accessed the second network is less than a maximum quantity of terminal devices allowed to simultaneously access the second network.

With reference to the twelfth aspect, in some implementations of the twelfth aspect, when the quantity of terminal devices that have accessed the second network is less than the maximum quantity of terminal devices allowed to simultaneously access the second network, the method further includes: The second network element sends, to a fourth network element, a message for requesting to update the quantity of terminal devices that have accessed the second network, where the fourth network element is configured to maintain the quantity of terminal devices that have accessed the second network.

With reference to the twelfth aspect, in some implementations of the twelfth aspect, before the second network element sends the second request message to the third network element in the second network based on the first request message, the method further includes: The second network element determines that the quantity of terminal devices that have accessed the second network is successfully updated.

With reference to the twelfth aspect, in some implementations of the twelfth aspect, the second response message includes a quality of service parameter of the connection, and the quality of service parameter of the connection is determined based on at least one of the following: a quality of service parameter of the terminal device and a quality of service parameter of the second network.

With reference to the twelfth aspect, in some implementations of the twelfth aspect, that the third network element determines, based on the second request message and the subscription data of the terminal device, whether to accept the establishment of the connection includes:

When the second request message and the subscription data of the terminal device satisfy a third condition, the third network element determines to accept the establishment of the connection; or when the second request message and the subscription data of the terminal device do not satisfy a third condition, the third network element determines not to accept the establishment of the connection.

The third condition includes one or two of the following conditions:
(1) When the second request message includes the information indicating the location of the terminal device, and the subscription data of the terminal device includes information indicating one or more geographic areas that the terminal device is allowed to access, the one or more geographic areas that the terminal device is allowed to access include the location of the terminal device; and
(2) when the second request message includes information indicating a logical zone that the terminal device requests to access, and the subscription data of the terminal device includes information indicating one or more logical zones that the terminal device is allowed to access, the one or more logical zones that the terminal device is allowed to access include the logical zone that the terminal device requests to access.

With reference to the twelfth aspect, in some implementations of the twelfth aspect, the first response message indicates that the establishment of the connection is accepted; and before the third network element sends the first response message to the second network element, the method further includes: The third network element determines that authentication does not need to be performed on the terminal device, or the third network element successfully authenticates the terminal device.

For beneficial effects of any one of the fourth aspect to the twelfth aspect and the implementations of the fourth aspect to the twelfth aspect, correspondingly refer to the related descriptions in the first aspect to the third aspect and the implementations of the first aspect to the third aspect. Details are not described herein again.

### BRIEF DESCRIPTION OF DRAWINGS

FIG. 1 is a diagram of a network architecture according to an embodiment of this application;
FIG. 2 is a schematic flowchart of a communication method 200 according to an embodiment of this application;
FIG. 3 is an example diagram of a method for updating a quantity of terminal devices that have accessed a second network according to an embodiment of this application;
FIG. 4 is a schematic flowchart of another data transmission method 400 according to an embodiment of this application;
FIG. 5 is a schematic block diagram of a communication apparatus 1000 according to an embodiment of this application;
FIG. 6 is a schematic block diagram of another communication apparatus 2000 according to an embodiment of this application; and
FIG. 7 is a diagram of a chip system 3000 according to an embodiment of this application.

### DESCRIPTION OF EMBODIMENTS

The technical solutions provided in this application may be applied to various communication systems, for example, a new radio (new radio, NR) system, a long term evolution (long term evolution, LTE) system, a frequency division duplex (frequency division duplex, FDD) system, and a time division duplex (time division duplex, TDD) system. The technical solutions provided in this application may further be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In the foregoing communication systems, a part operated by an operator may be referred to as a public land mobile network (public land mobile network, PLMN), and is for providing a land mobile communication service. The PLMN may also be referred to as an operator network, a macro network, a public network (public network), or the like, and the operator that operates the PLMN may be referred to as a macro-network operator. The PLMN described in embodiments of this application may be specifically a network compliant with a requirement of the 3rd generation partnership project (3rd generation partnership project, 3GPP) standard, which is referred to as a 3GPP network for short. The 3GPP network includes but is not limited to a 5th-generation (5th-generation, 5G) mobile communication network, a 4th-generation (4th-generation, 4G) mobile communication network, and another future communication network, for example, a 6th-generation (6th-generation, 6G) mobile communication network.

As the 3GPP network develops from being to business (to business, 2B) toward being to consumer (to consumer, 2C), a series of emerging technologies emerge, to support deployment of a network in a specified location area (for example, a business, a campus, a shopping mall, or a park), provide a customized service for a user in the area, and implement continuous expansion of an application scenario of the 3GPP network. The network that serves the user in the specified location area may be referred to as a sub-network (sub-network), the specified area may be referred to as a sub-network site, the user that accesses the sub-network in the sub-network site may be referred to as a sub-network user, and an owner of the sub-network site may be referred to as a sub-network tenant. The sub-network may also be referred to as a private network (private network), a dedicated network (dedicated network), or the like. This is not limited in this application.

In a conventional technology, the macro-network operator may deploy the sub-network in the sub-network site by using a shared macro-network resource based on technologies such as slicing (slicing), multi-access edge computing (multi-access edge computing, MEC), and a local data network (local area data network, LADN). After signing a contract with the macro-network operator, the sub-network tenant may provide a service for the sub-network user by using the sub-network. However, in this case, the sub-network cannot autonomously control permission for the sub-network user to access the sub-network. Generally, the access permission of the sub-network user can be added, modified, or deleted only by using a unified data management (unified data management, UDM) network element or policy control (policy control function, PCF) network element in the macro network. The slicing technology is used as an example. Subscription data of the sub-network user is managed by the UDM network element in the macro network, and the sub-network user can access the sub-network only after a slice corresponding to the sub-network is added to the subscription data. Further, when home locations of sub-network users are different, subscription data of these sub-network users is managed by UDM network elements in macro networks at the different home locations. In this case, the UDM network elements in the macro networks at the different home locations need to be separately modified. Consequently, deployment and maintenance of the sub-network are quite complex, which limits development of a scenario of the sub-network.

In view of this, this application provides a communication method, apparatus, and system, so that a sub-network autonomously manages permission for a terminal device to access the sub-network, to reduce complexity and costs of deployment and maintenance of the sub-network.

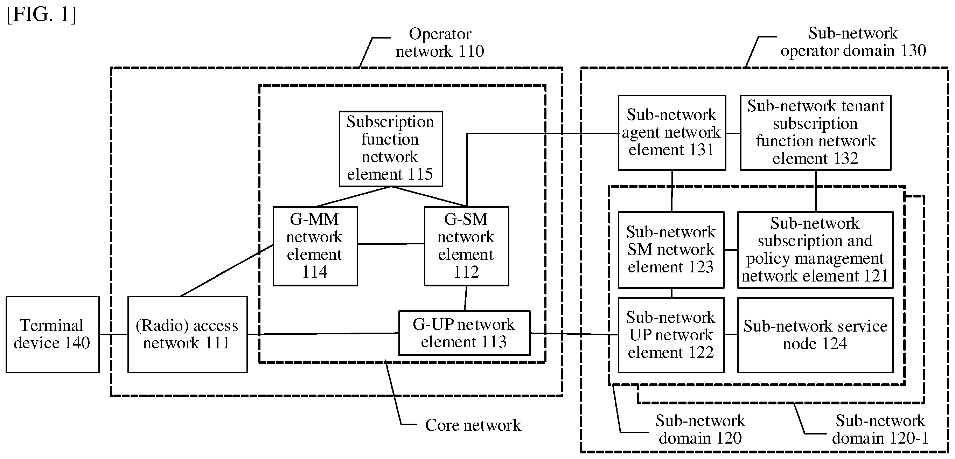

FIG. 1 is a diagram of a network architecture 100 to which an embodiment of this application is applicable. The network architecture 100 includes an operator network 110, a sub-network domain 120, a sub-network operator domain 130, and a terminal device 140.

The operator network 110 is a network deployed by a macro-network operator, and includes a (radio) access network ((radio) access network, (R)AN) 111 and a core network (core network, CN) part.

The (R)AN 111 may include one or more access network elements or access network devices. The access network device is a node or a device that enables the terminal device 140 to access a wireless network. The access network device may also be referred to as a radio access network device or the access network equipment. The (R)AN, which may be considered as a sub-network in the operator network, is an implementation system between a service node in the operator network and the terminal device. To access the operator network, the terminal device first passes through the (R)AN, and then may be connected to the service node in the operator network through the (R)AN. The access network device in embodiments of this application is a device that provides a wireless communication function for the terminal device, and may also be referred to as a network device. The (R)AN device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a base band unit (base band unit, BBU), a transmitting and receiving point (transmitting and receiving point, TRP), a transmission point (transmission point, TP), a small cell device, a mobile switching center, a network device in a future network, or the like. The access network device may alternatively be a module or unit that completes a function of a base station, for example, includes a central unit (central unit, CU) and a distributed unit (distributed unit, DU). In a possible network structure, the CU may be configured to support communication in protocols such as radio resource control (radio resource control, RRC), a packet data convergence protocol (packet data convergence protocol, PDCP), and a service data adaptation protocol (service data adaptation protocol, SDAP). The DU may be configured to support communication in a radio link control (radio link control, RLC) layer protocol, a medium access control (medium access control, MAC) layer protocol, and a physical layer protocol. A specific technology and a specific device form that are used for the access network device are not limited in embodiments of this application. In systems for which different radio access technologies are used, devices having a function of the access network device may have different names. For ease of description, in all embodiments of this application, the foregoing apparatuses that provide the wireless communication function for the terminal device are collectively referred to as access network devices, or referred to as RANs or ANs for short. A specific type of the access network device is not limited in embodiments of this application.

The CN part in the operator network 110 may include network elements such as a global session management (global session management, G-SM) network element 112, a global user plane (global user plane, G-UP) network element 113, a global mobility management (global mobility management, G-MM) network element 114, and a subscription function network element 115. The G-SM network element 112, the G-MM network element 114, and the subscription function network element 115 may be referred to as control plane network elements in the operator network 110, and the G-UP network element 113 may be referred to as a user plane network element in the operator network 110. The following briefly describes the network elements in the CN part.
1. The G-SM network element 112 may be configured to establish and manage a connection or a session between the terminal device and the sub-network, and may further be configured to collect statistics on and supervise an operator network resource used by the terminal device to access the sub-network, for example, usage of the network resource and use duration of the network resource. For example, the G-SM network element 112 may be a session management function (session management function, SMF) network element in a 5G network.
2. The G-UP network element 113 may be configured to: allocate tunnel information to the connection between the terminal device and the sub-network, forward a sub-network service data packet between the terminal device and the sub-network, collect charging information related to the sub-network, and so on. The operator network 110 may include one or more G-UP network elements. An example in which the operator network 110 includes one G-UP network element 113 is used for description in FIG. 1. For example, the G-UP network element 113 may be a user plane function (user plane function, UPF) network element in the 5G network.
3. The G-MM network element 114 may be configured to perform authentication and authorization on access of the terminal device, and may further be configured to manage mobility of the terminal device. For example, the G-MM network element 114 may be an access and mobility management function (access and mobility management function, AMF) network element in the 5G network.
4. The subscription function network element 115 may be configured to store subscription data of a subscriber in the operator network 110, for example, information such as a subscription permanent identifier (subscription permanent identifier, SUPI) of the subscriber and a generic public subscription identifier (generic public subscription identifier, GPSI) of the subscriber, and may further be configured to provide another network element in a CN with a function of subscription data storage and obtaining. For example, the subscription function network element 115 may be a unified data management (unified data management, UDM) function network element or a unified data repository (unified data repository, UDR) function network element in the 5G network, or may integrate functions of the UDM network element and the UDR network element.

Optionally, the CN part may further include network elements such as a network exposure function (network exposure function, NEF) network element, a network function repository function (network function repository function, NRF) network element, a policy control function (policy control function, PCF) network element, an application function (application function, AF) network element, and an authentication server function (authentication server function, AUSF) network element. For specific functions of the network elements, refer to detailed descriptions in the 5G communication system. Details are not described herein again. In embodiments of this application, the network elements may also be collectively referred to as network functions (network functions, NFs).

The sub-network domain 120 covers a sub-network site, and provides a sub-network service for a sub-network user in the sub-network site. The sub-network domain 120 may include one or more of the following network elements: a sub-network subscription and policy management (sub-network subscription and policy management, SSPM) network element 121, a sub-network user plane (user plane, UP) network element 122, a sub-network session management (session management, SM) network element 123, or a sub-network service node 124. The SSPM network element 121 and the sub-network SM network element 123 may be referred to as control plane network elements in the sub-network domain 120, and the sub-network UP network element 122 may be referred to as a user plane network element in the sub-network domain 120. The network element may be deployed in the sub-network site, may be deployed on cloud of a sub-network operator, or may be deployed on public cloud leased by the sub-network operator or a sub-network tenant. This is not limited in this application. The following briefly describes the network elements included in the sub-network domain 120.
1. The SSPM network element 121 may be configured to manage subscription data in the sub-network domain 120, for example, subscription data of a terminal device that subscribes to the sub-network domain 120 and default subscription data, and may further be configured to manage user information of the sub-network domain 120, for example, identification information of a terminal device that is allowed to access the sub-network domain 120.
2. The sub-network UP network element 122 may be configured to: allocate tunnel information to a connection between the terminal device and the sub-network domain 120, and forward user plane data between the terminal device and the sub-network service node 124 in the sub-network domain 120.
3. The sub-network SM network element 123 may be configured to manage permission for the terminal device to access the sub-network domain 120, or may be configured to establish and manage a session or the connection between the terminal device and the sub-network domain 120, for example, establish, maintain, and delete the session or the connection. The session or connection is a channel for transmission of sub-network service data between the terminal device and the sub-network domain 120.
4. The sub-network service node 124 may be a server configured to provide the sub-network service for the terminal device, for example, a web server (web server).

The sub-network operator domain 130 is a network deployed by the sub-network operator, may include one or more sub-network domains, and provides the sub-network for one or more sub-network tenants. For example, in FIG. 1, the sub-network operator domain 130 includes the sub-network domain 120 and a sub-network domain 120-1. It should be noted that the macro-network operator and the sub-network operator may be the same, or may be different. This is not limited in this application.

The sub-network operator domain 130 may include one or two of the following network elements: a sub-network agent (sub-network agent, SNA) network element 131 and a sub-network tenant subscription function network element 132.
1. The SNA network element 131 is a control plane network element in the sub-network operator domain 130, and may also be referred to as a sub-network operator domain controller. The SNA network element 131 may be configured to manage the one or more sub-network domains included in the sub-network operator domain 130, may be configured to manage permission for the terminal device to access the one or more sub-network domains, or may be used as a signaling gateway to forward signaling between the operator network 110 and the one or more sub-network domains.
2. The sub-network tenant subscription function network element 132 may be configured to store or maintain subscription information of the one or more sub-network domains included in the sub-network operator domain 130.

It should be noted that the sub-network domain 120 and the sub-network operator domain 130 may further include another network element. This is not limited in this application. The functions of the foregoing network elements/devices may be completed by an independent network element/device, or may be completed by several network elements/devices together. The foregoing network elements or functions may be physical entities in hardware devices, software instances running on dedicated hardware, or virtualization functions instantiated on sharing platforms (for example, cloud platforms). In short, a network element may be implemented by hardware, or may be implemented by software. The foregoing network elements may be independent devices, or may be integrated into a same device to implement different functions. Specific forms of the foregoing network elements are not limited in this application.

It should be further noted that the foregoing names are defined merely for ease of distinguishing between different functions, and should not constitute any limitation on this application. This application does not exclude a possibility of using other names. For example, in a 6G network, a part or all of the foregoing network elements may still use terms in 5G, or may use other names. For another example, the G-SM network element may also be referred to as an operator network session management network element, the G-UP network element may also be referred to as an operator network user plane network element, and the G-MM network element may also be referred to as an operator network mobility management network element.

The terminal device 140 is a device that provides voice and/or data connectivity for a user. The terminal device may also be referred to as user equipment (user equipment, UE). The terminal device in this application is a device having a wireless transceiver function, and may communicate with one or more CN devices via the access network device (which may also be referred to as the access device). The terminal device may also be referred to as an access terminal, a terminal, a subscriber unit, a subscriber station, a mobile station, a remote station, a remote terminal, a mobile device, a user terminal, a user agent, a user apparatus, or the like. The terminal device may be deployed on land, and includes an indoor device, an outdoor device, a handheld device, or a vehicle-mounted device; may be deployed on water (for example, on a ship); or may be deployed in the air (for example, on an aircraft, a balloon, and a satellite). The terminal device may be a cellular phone, a cordless phone, a session initiation protocol (session initiation protocol, SIP) phone, a smartphone, a mobile phone, a wireless local loop (wireless local loop, WLL) station, a personal digital assistant (personal digital assistant, PDA), or the like. Alternatively, the terminal device may be a handheld device having the wireless communication function, a compute device, another device connected to a wireless modem, a vehicle-mounted device, a wearable device, an uncrewed aerial vehicle device, a terminal in an internet of things or an internet of vehicles, a terminal in any form in the 5G network or the future network, relay user equipment, a terminal in a future evolved 6G network, or the like. The relay user equipment may be, for example, a 5G residential gateway (residential gateway, RG). For example, the terminal device may be a virtual reality (virtual reality, VR) terminal, an augmented reality (augmented reality, AR) terminal, a wireless terminal in industrial control, a wireless terminal in self driving, a wireless terminal in telemedicine, a wireless terminal in a smart grid, a wireless terminal in transportation security, a wireless terminal in a smart city, or a wireless terminal in a smart home. The terminal device herein is a 3GPP terminal. A type or the like of the terminal device is not limited in embodiments of this application. For ease of description, in this application, an example in which the UE represents the terminal device is used for description below.

When the terminal device 140 needs to use the sub-network service provided by the sub-network domain 120, the terminal device 140 may access the sub-network domain 120 through the operator network 110, and establish the connection with the sub-network domain 120, that is, establish a connection with the sub-network service node 124 that is in the sub-network domain 120 and that provides the sub-network service. The connection may also be referred to as a session or a tunnel, and is for service data exchange between the terminal device 140 and the sub-network domain 120 through the operator network 110. That is, the terminal device 140 may exchange the service data related to the sub-network service with the sub-network service node 124 in the sub-network domain 120 through the connection. The connection between the terminal device 140 and the sub-network domain 120 may also be referred to as a sub-network connection of the terminal device 140.

For example, for uplink data sent by the terminal device 140 to the sub-network service node in the sub-network domain 120, the terminal device 140 may first send the data to the G-UP network element 113 through the (R)AN 111, then the G-UP network element 113 sends the data to the sub-network UP network element 122, and then the sub-network UP network element 122 sends the data to the sub-network service node 124, to complete transmission of the uplink data. Similarly, for downlink data sent by the sub-network service node in the sub-network domain 120 to the terminal device 140, the sub-network service node 124 may sequentially send the data to the terminal device 140 via the sub-network UP network element 122, the G-UP network element 113, and the (R)AN 111.

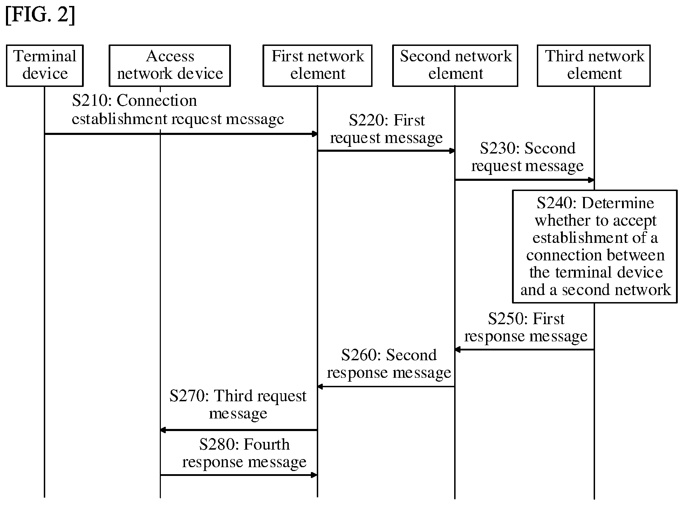

FIG. 2 is a schematic flowchart of a communication method 200 according to an embodiment of this application. As shown in FIG. 2, the communication method 200 may be performed by a terminal device, an access network device and a first network element in a first network, a second network element, and a third network element in a second network, or may be performed by a module and/or a component (for example, a chip or an integrated circuit) that have/has a corresponding function and that are/is installed in the terminal device, the access network device, the first network element, the second network element, and the third network element. This is not limited in this application. For ease of description, the following uses the terminal device, the access network device, the first network element, the second network element, and the third network element as execution bodies for description. For parts that are not described in detail, refer to an existing protocol.

The communication method 200 is applicable to the network architecture 100 shown in FIG. 1. For example, the terminal device in FIG. 2 is the terminal device 140 in FIG. 1. The first network is the operator network 110 in FIG. 1. The access network device is the (R)AN 111. The first network element is a control plane network element in the operator network 110. For example, the first network element is the G-SM network element 112 or the G-MM network element 114. The second network element is the SNA network element 131 in FIG. 1. The second network is the sub-network domain 120 in FIG. 1. The third network element is a control plane network element in the sub-network domain 120. For example, the third network element is the sub-network SM network element 123.

As shown in FIG. 2, the communication method 200 includes the following steps.

**S210:** The terminal device sends, to the first network element in the first network, a message for requesting establishment of a connection between the terminal device and the second network. Accordingly, the first network element receives, from the terminal device, the message for requesting the establishment of the connection between the terminal device and the second network.

The message for requesting the establishment of the connection between the terminal device and the second network may be referred to as a connection establishment request message, a session establishment request message, or a sub-network access request message. This is not limited in this application. The following uses the connection establishment request message as an example for description.

The connection establishment request message may alternatively be for requesting to access the second network or for requesting to establish the connection between the terminal device and the second network. The connection establishment request message may trigger the first network element to establish the connection between the terminal device and the second network. That is, after receiving the connection establishment request message, the first network element starts to establish the connection between the terminal device and the second network. For example, after receiving the connection establishment request message, the first network element sends a second request message to the second network element.

For example, when the terminal device needs to use a service provided by the second network, the terminal device sends the connection establishment request message to the first network element. The service provided by the second network for the terminal device may be referred to as a sub-network service. The connection between the terminal device and the second network may be referred to as a sub-network connection of the terminal device, and the connection is used by the terminal device and the second network to perform transmission of data of the sub-network service through the first network.

The first network may be referred to as a serving operator network of the terminal device, or an operator network that serves the terminal device.

Optionally, the terminal device may directly send the connection establishment request message to the first network element, or may send the connection establishment request message to the first network element via another device or network element. For example, the terminal device may send the connection establishment request message to the first network element via the access network device in the first network.

Optionally, the connection establishment request message includes identification information of the terminal device, and the identification information of the terminal device identifies the terminal device, so that the first network element can identify an identity of the terminal device based on the identification information of the terminal device, and determine that a terminal device that initiates the establishment of the connection is the terminal device indicated by the identification information.

The identification information of the terminal device includes at least one of the following information: first identification information of the terminal device or second identification information of the terminal device. The first identification information of the terminal device is an identifier allocated by the first network to the terminal device. For example, when the terminal device subscribes to the first network, the first network allocates the first identification information to the terminal device. The first identification information of the terminal device may be mobile station international integrated services digital network number (mobile station international integrated services digital network number, MSISDN). The second identification information of the terminal device is an identifier allocated by the second network to the terminal device. For example, when the terminal device subscribes to the second network, the second network allocates the second identification information to the terminal device. The second identification information of the terminal device may also be referred to as a sub-network subscription identifier of the terminal device.

Optionally, the connection establishment request message includes identification information of the second network, and the identification information identifies the second network. The first network element may determine, based on the identification information of the second network, that a network that the terminal device requests to access is the second network.

Optionally, the connection establishment request message includes information indicating one or more logical zones that the terminal device requests to access. The one or more logical zones that the terminal device requests to access are referred to as target logical zones below. For example, the connection establishment request message includes identification information of the target logical zone.

The second network may include a plurality of logical zones, different terminal devices may be allowed to access different logical zones, and a same terminal device may access one or more logical zones. For example, based on different network security levels, a campus network of an enterprise may be divided into a green zone, a red zone, and a guest zone. All employees of the enterprise can access the green zone. However, only an employee with specific permission can access the red zone, and a person who is not an employee of the enterprise can access only the guest zone.

For example, the connection establishment request message includes a first container (container), and the first container includes the information indicating the target logical zone. The first container is to be transparently transmitted to the third network element in the second network. That is, after receiving the first container, a network element or a device other than the third network element does not parse content in the first container. In this way, a case in which the another network element/device tampers with information can be avoided, to improve information transmission security.

**S220:** The first network element sends the first request message to the second network element. Accordingly, the second network element receives the first request message from the first network element.

For example, the first network element sends the first request message to the second network element in response to the connection establishment request message from the terminal device. That is, the first network element is triggered by the connection establishment request message to send the first request message to the second network element.

The second network element is configured to manage the second network. In other words, the second network element serves the second network, and the second network element is configured to forward a message between the first network and the second network. For example, the second network element is a control plane network element (for example, the SNA network element 131) in the sub-network operator domain 130 in FIG. 1. In this implementation, the second network element is configured to manage the one or more sub-network domains included in the sub-network operator domain 130, where the one or more sub-network domains include the sub-network domain 120 (namely, the second network). That is, the second network element serves the one or more sub-network domains included in the sub-network operator domain 130, and the second network element is configured to forward a message between the operator network 110 and the one or more sub-network domains included in the sub-network operator domain 130.

The first request message may be for requesting the establishment of the connection between the terminal device and the second network, or may be for requesting the access of the terminal device to the second network.

The first request message may include the identification information of the terminal device, and the identification information of the terminal device includes at least one of the following information: the first identification information of the terminal device or the second identification information of the terminal device.

For example, the first network element sends the first identification information and/or the second identification information in the connection establishment request message to the second network element via the first request message.

For another example, the first network element obtains the first identification information of the terminal device from subscription data of the terminal device, and send the first identification information to the second network element via the first request message. For example, after receiving the connection establishment request message, the first network element sends, to a UDM network element (for example, the subscription function network element 115 in FIG. 1) in the first network, a message for requesting the subscription data of the terminal device, and receives the subscription data of the terminal device from the UDM network element, where the subscription data includes the first identification information of the terminal device.

Optionally, the first network element determines, based on the identification information of the second network, whether to obtain the first identification information of the terminal device from the subscription data of the terminal device. For example, the first network element maintains a list, where the list includes identification information of one or more sub-networks. When the list includes the identification information of the second network, the first network element obtains the first identification information of the terminal device from the subscription data of the terminal device. The list may be dynamically updated. For example, when the first network element receives indication information from the second network, where the indication information indicates that the first network needs to perform authentication on the terminal device that requests to access the second network, the first network element adds the identification information of the second network to the list. It may alternatively be understood as that, after receiving the indication information from the second network, if the first network element receives the connection establishment request message from the terminal device, the first network element performs authentication on the terminal device. When the authentication succeeds, the first network element obtains the first identification information of the terminal device from the subscription data of the terminal device, and sends the obtained first identification information to the second network element via the first request message.

In this implementation, the second network element may consider that the first identification information of the terminal device is trusted. That is, when the first identification information in the first request message is obtained by the first network element from the subscription data of the terminal device, the second network element considers that the first network element has performed authentication on the terminal device, and the authentication succeeds, so that the second network element does not need to perform authentication on the terminal device, to reduce processing complexity of the second network element, and improve efficiency of access of the terminal device to the second network element.

The second network element may learn, in different manners, whether the first identification information in the first request message is trusted. For example, the second network element determines, based on a location of the first identification information in the first request message, whether the first identification information is trusted. For example, when the first identification information is obtained by the first network element from the connection establishment request message, the first network element places the first identification information at a first location in the first request message, and sends the first identification information to the second network element. When the first identification information is obtained by the first network element from the subscription data of the terminal device, the first network element places the first identification information at a second location in the first request message, and sends the first identification information to the second network element, so that the second network element can determine, based on the first identification information being at the second location in the first request message, that the first identification information is trusted. For example, the second network element may determine, based on indication information in the first request message, whether the first identification information is trusted. For example, when the first request message includes indication information indicating that the first identification information is trusted, the second network element determines that the first identification information is trusted. When the first request message does not include indication information indicating that the first identification information is trusted, the second network element considers that the first identification information is untrusted. For another example, the indication information is a bit. When the first identification information is obtained by the first network element from the connection establishment request message, the first network element sets a value of the bit to a first value (for example, 0). When the first identification information is obtained by the first network element from the subscription data of the terminal device, the first network element sets a value of the bit to a second value (for example, 1), so that the second network element can determine, based on the value of the bit being the second value, that the first identification information is trusted.

Optionally, the first request message includes the identification information of the second network. For example, the first network element sends the identification information of the second network in the connection establishment request message to the second network element via the first request message. The second network element may determine, based on the identification information of the second network, that the network that the terminal device requests to access is the second network.

Optionally, the first request message includes location information of the terminal device, where the location information indicates a current location of the terminal device. The location information is, for example, user location information (user location information, ULI) of the terminal device, an identity of a cell in which the terminal device is currently located, or a tracking area identity (tracking area identity, TAI).

Optionally, the first request message includes identification information of the operator network that serves the terminal device, namely, identification information of the first network, which may also be referred to as identification information of a serving PLMN (serving PLMN) of the terminal device.

Optionally, the first request message includes the information indicating the target logical zone of the terminal device, for example, the identification information of the target logical zone. For example, when the connection establishment request message includes the identification information of the target logical zone, the first request message includes the identification information of the target logical zone. For example, the first request message includes the first container in the connection establishment request message.

Before the first network element sends the first request message to the second network element, the communication method 200 may further include: The first network element obtains address information of the second network element. In this implementation, the first network element sends the first request message to the second network element based on the address information of the second network element. The address information of the second network element is for communicating with the second network element. For example, the address information of the second network element may be an internet protocol (Internet protocol, IP) address of the second network element.

For example, the first network element may obtain the address information of the second network element in the following **manner 2.1** or **manner 2.2.**

**Manner 2.1:** The first network element receives the address information of the second network element from an NRF network element in the first network.

For example, the second network element sends, to the NRF network element, identification information of a network served or managed by the second network element and the address information of the second network element, where the network served or managed by the second network element includes the second network. For another example, the second network element sends, to the NRF network element, the address information of the second network element and identification information of a sub-network domain in a sub-network operator domain (namely, the sub-network operator domain 130) in which the second network element is located, where the identification information includes the identification information of the second network. That is, the second network element registers the identification information of the second network and the address information of the second network element with the NRF network element.

Accordingly, the NRF network element receives the identification information of the second network and the address information of the second network element from the second network element. Further, the NRF network element may store a correspondence between the identification information of the second network and the address information of the second network element.

After receiving the identification information of the second network in the connection establishment request message, the first network element sends a first query message to the NRF network element, where the first query message includes the identification information of the second network. The first query message is for querying for address information of the second network element corresponding to the second network. That is, the first query message is for querying for the address information of the second network element that serves the second network. That is, the first query message is for querying for the address information of the second network element in the sub-network operator domain to which the second network belongs.

Accordingly, the NRF network element receives the first query message from the first network element, and searches for the address information of the second network element based on the first query message. For example, the NRF network element queries for the locally stored correspondence based on the identification information of the second network in the first query message, determines the address information that is of the second network element and that corresponds to the identification information of the second network, and sends the address information of the second network element to the first network element. Accordingly, the first network element receives the address information of the second network element from the NRF network element.

**Manner 2.2:** The first network element receives the address information of the second network element from a domain name server (domain name server, DNS).

For example, the second network element generates a first fully qualified domain name (fully qualified domain name, FQDN) based on the identification information of the second network, and sends the first FQDN and the address information of the second network element to the DNS, that is, registers the first FQDN and the address information of the second network element with the DNS. For another example, in the network architecture shown in FIG. 1, the sub-network operator domain 130 further includes a network element #1 configured to operate, administrate, and maintain the sub-network operator domain 130. For a specific function of the network element #1, refer to an operation, administration, and maintenance (operation, administration, and maintenance, OAM) network element in a 5G network. The network element #1 generates a first FQDN based on the identification information of the second network, or the network element #1 receives a first FQDN from the second network element. Then, the network element #1 sends the first FQDN and the address information of the second network element to the DNS.

Accordingly, the DNS receives the first FQDN and the address information of the second network element that are sent by the second network element or the network element #1. Further, the DNS may store a correspondence between the address information of the second network element and the first FQDN.

After receiving the identification information of the second network in the connection establishment request message, the first network element generates the first FQDN based on the identification information of the second network, where a manner in which the first network element generates the first FQDN is the same as a manner in which the second network element or the network element #1 generates the first FQDN. The first network element sends a first query message to the DNS, where the first query message includes the first FQDN.

Accordingly, the DNS receives the first query message from the first network element, determines, based on the first FQDN in the first query message and the locally stored correspondence, the address information that is of the second network element and that corresponds to the first FQDN, and sends the address information of the second network element to the first network element. Accordingly, the first network element receives the address information of the second network element from the DNS network element.

It should be noted that the first network element may alternatively obtain the address information of the second network element in another manner. This is not limited in this embodiment of this application.

Optionally, the first request message includes first tunnel information. The first tunnel information is for transmission of the sub-network service data of the terminal device. That is, the first tunnel information is for sending downlink data of the sub-network service to a first user plane network element (for example, the G-UP network element 113 in FIG. 1) in the first network. For example, a second user plane network element (for example, the sub-network UP network element 122 in FIG. 1) in the second network may send the sub-network service data of the terminal device to the first user plane network element based on the first tunnel information.

The first tunnel information may be allocated by the first user plane network element to the connection between the terminal device and the second network. For example, after the first network element receives the connection establishment request message from the terminal device, the communication method 200 further includes the following steps S221 and S222 (not shown in the figure).

S221: The first network element sends indication information #1 to the first user plane network element. Accordingly, the first user plane network element receives the indication information #1 from the first network element.

The indication information #1 may indicate the first user plane network element to allocate tunnel information to the sub-network connection of the terminal device. In other words, the indication information #1 triggers the first user plane network element to allocate the tunnel information to the sub-network connection of the terminal device.

Before the first network element sends the indication information #1 to the first user plane network element, the first network element may further select the first user plane network element from one or more user plane network elements included in the first network, to support the sub-network connection of the terminal device, that is, to forward the sub-network service data between the terminal device and the second network.

S222: In response to the indication information #1, the first user plane network element sends, to the first network element, the first tunnel information allocated to the sub-network connection of the terminal device.

For example, the first user plane network element is triggered by the indication information #1 to allocate the first tunnel information to the sub-network connection of the terminal device, and sends the first tunnel information to the first network element.

Accordingly, the first network element receives the first tunnel information from the first user plane network element, and sends the first tunnel information to the second network element via the first request message.

S230: The second network element sends a second request message to the third network element in the second network based on the first request message. Accordingly, the third network element receives the second request message from the second network element.

For example, when a condition #1 is satisfied, the second network element sends the second request message to the third network element in the second network. That is, when the condition #1 is satisfied, the second network element allows the terminal device to access the second network, and then sends the second request message to the third network element in the second network. In this case, it may be considered that the terminal device accesses the second network via the second network element.

The condition #1 includes one or more of the following conditions 3.1 to 3.3.

**Condition 3.1:** When the first request message includes the identification information of the terminal device, user information of the second network includes the identification information of the terminal device, where the user information of the second network includes identification information of one or more terminal devices allowed to establish a connection with the second network. The identification information of the terminal device may be the first identification information of the terminal device or the second identification information of the terminal device.

**Condition 3.2:** The first request message and subscription data of the second network satisfy a first condition, where the first condition may include one or two of the following conditions:
(1) When the first request message includes the identification information of the first network, and the subscription data of the second network includes a serving operator network list, the serving operator network list includes the identification information of the first network; and
(2) when the first request message includes the location of the terminal device, and the subscription data of the second network includes a service range of the second network, the service range of the second network includes the location of the terminal device.

**Condition 3.3:** The subscription data of the second network includes a maximum quantity M of terminal devices allowed to simultaneously access the second network, a quantity X of terminal devices that have accessed the second network is less than the maximum quantity M of terminal devices allowed to simultaneously access the second network, and X and M are non-negative integers.

The following uses examples to describe implementations in which the second network element determines whether the conditions 3.1 to 3.3 are satisfied.

Before the second network element performs determining on the condition 3.1, the communication method 200 may further include: The second network element obtains the user information of the second network. For example, the second network element may obtain the user information of the second network by using the following steps S231 and S232 (not shown in the figure).

S231: The second network element sends a query message #1 to a fourth network element, where the query message #1 is for querying for or requesting the user information of the second network. Accordingly, the fourth network element receives the query message #1 from the second network element.

Optionally, the query message #1 includes the identification information of the second network.

For example, the second network element determines, based on the identification information of the second network in the first request message, that the network that the terminal device requests to access is the second network, and then sends the query message #1 to the fourth network element.

S232: In response to the query message #1, the fourth network element sends the user information of the second network to the second network element. Accordingly, the second network element receives the user information of the second network from the fourth network element.

For example, the fourth network element determines, based on the identification information of the second network in the query message #1, that user information corresponding to the identification information of the second network is the user information of the second network, or determines, based on the identification information of the second network in the query message #1, that user information including the identification information of the second network is the user information of the second network; and then sends the user information of the second network to the second network element.

That the user information of the second network includes the identification information of the one or more terminal devices allowed to establish the connection with the second network may alternatively be understood as that the one or more terminal devices are terminal devices that subscribe to the second network element and that the one or more terminal devices are subscribers of the second network element.

After receiving the user information of the second network from the fourth network element, the second network element determines whether the condition 3.1 is satisfied.

Before the fourth network element sends the user information of the second network to the second network element, the communication method 200 may further include: A fifth network element in the second network sends the user information of the second network to the fourth network element. Accordingly, the fourth network element receives the user information of the second network from the fifth network element. The fifth network element may be the SSPM network element 121 in FIG. 1.

For example, the fifth network element maintains the user information of the second network. After the terminal device subscribes to the second network element, the fifth network element adds the identification information of the terminal device to the user information of the second network, and sends the user information of the second network to the fourth network element.

The fifth network element may directly send the user information of the second network to the fourth network element, or may indirectly send the user information of the second network to the fourth network element via another network element. This is not limited in this embodiment of this application.

For another example, the fourth network element sends the user information of the second network to the second network element, where the user information of the second network indicates that all terminal devices are allowed to access the second network. After receiving the user information of the second network from the fourth network element, the second network element may determine that all the terminal devices are allowed to access the second network. In this implementation, the condition 3.1 may be replaced with a **condition 3.1a:** All the terminal devices are allowed to access the second network. That is, the second network allows an unsubscribed terminal device to access the second network.

Before the second network element performs determining on the condition 3.2, the communication method 200 further includes: The second network element obtains the subscription data of the second network.

The subscription data of the second network may include one or more of the following information:
(1) Identification information of the second network, identifying the second network.
(2) Service range of the second network, which may also be referred to as coverage or a service area of the second network, and indicates a geographic area served by the second network, a cell served by the second network, or a tracking area served by the second network.
(3) Maximum quantity of terminal devices allowed to simultaneously access the second network, which may also be referred to as a maximum quantity of terminal devices supported by the second network, a maximum quantity of terminal devices that can be simultaneously served by the second network, or a maximum quantity of terminal devices that simultaneously maintain connections to the second network.
(4) Quality of service (quality of service, QoS) parameter of the second network, for determining a quality of service parameter of the connection between the terminal device and the second network. The subscription data of the second network may include one or more groups of quality of service parameters, where the group of quality of service parameters may alternatively be understood as a quality of service profile.
   The quality of service profile may include one or more of the following parameters: information indicating a quality of service level (for example, a 5G QoS identifier (5G QoS identifier, 5QI) or a QoS class identifier (QoS class identifier, QCI)), a scheduling priority, a maximum bandwidth, a guaranteed bandwidth, a packet delay budget (packet delay budget, PDB), a maximum allowed burst, an allocation and retention priority (allocation and retention priority, ARP), and the like. For specific meanings of the foregoing parameters, refer to the 3GPP standard. Details are not described herein again.
(5) Serving operator list, which may include identification information of one or more macro-network operators. When the identification information of the macro-network operator is included in the list, the terminal device may access the second network through a network of the macro-network operator; or when identification information of a serving operator of the terminal device is included in the list, the terminal device may access the second network.

The serving operator list may alternatively be replaced with the serving operator network list, and includes identification information (for example, a PLMN identifier (identifier, ID)) of one or more operator networks. When the identification information of the operator network is included in the list, the terminal device may access the second network through the operator network; or when identification information of the serving operator network of the terminal device is included in the list, the terminal device may access the second network.

The serving operator/serving operator network of the terminal device is an operator/operator network that serves the terminal device.

(6) Radio resource reservation information of the one or more operator networks. The one or more operator networks are deployed by an operator in the serving operator list, or the one or more operator networks are included in the serving operator network list. The radio resource reservation information of the operator network indicates a radio resource reserved by the operator network for the second network, and the radio resource may be used by the operator network to forward the sub-network service data between the terminal device and the second network.

For example, the radio resource reservation information may include one or more of the following: (a) information indicating a time domain resource in the operator network; (b) information indicating a frequency domain resource in the operator network; (c) information indicating a radio resource block in the operator network; and (d) information indicating a data radio bearer of an access network device in the operator network.

(7) Total subscribed bandwidth of the second network, indicating a maximum bandwidth that can be used by all the terminal devices accessing the second network.

The subscription data of the second network may be created when a sub-network tenant subscribes to a sub-network operator for lease of the second network. It should be understood that the subscription data of the second network may be dynamically updated after being created. The subscription data of the second network may be managed and maintained by the fourth network element, where the fourth network element may be the sub-network tenant subscription function network element 132 in FIG. 1. In this implementation, that the second network element obtains the subscription data of the second network may be that the second network element receives the subscription data of the second network from the fourth network element. For example, the second network element may receive the subscription data of the second network from the fourth network element by using a method similar to the foregoing steps S231 and S232.

Before determining on the condition 3.3 is performed, the communication method 200 may further include: The second network element obtains the quantity X of terminal devices that have accessed the second network.

In an implementation, the second network element receives X from the fourth network element, and determines whether X is less than M. The second network element may receive X from the fourth network element in any one of the following manners 3.1 to 3.3, or the second network element may receive X from the fourth network element in another manner. This is not limited in this embodiment of this application.

**Manner 3.1:** The second network element sends a query message #2 to the fourth network element, where the query message #2 is for querying for or requesting X. The query message #2 may include the identification information of the second network. Accordingly, the fourth network element receives the query message #2 from the second network element, determines X based on the query message #2, and sends X to the second network element. In this way, the second network element can obtain latest X by querying the fourth network element.

**Manner 3.2:** The fourth network element periodically sends X to the second network element. For example, the second network element sends a subscription request message #1 to the fourth network element, where the subscription request message #1 is for requesting to subscribe to X, or the subscription request message #1 is for requesting to periodically push X. Accordingly, the fourth network element receives the subscription request message #1 from the second network element, and periodically sends X to the second network element based on the subscription request message #1. In this way, the second network element can periodically obtain X without querying the fourth network element, to reduce processing complexity of the second network element.

**Manner 3.3:** The fourth network element sends X to the second network element when X is updated. For example, the second network element sends a subscription request message #2 to the fourth network element, where the subscription request message #2 is for requesting to subscribe to X, or the subscription request message #2 is for requesting to send X when X is updated. Accordingly, the fourth network element receives the subscription request message #2 from the second network element, and sends, based on the subscription request message #2, updated X to the second network element when X is updated. In this way, the second network element can obtain latest X without querying the fourth network element, to reduce processing complexity of the second network element.

In another implementation, the second network element is the SNA network element 131 (denoted as an SNA network element #1) in FIG. 1, and the sub-network operator domain 130 further includes another SNA network element (denoted as an SNA network element #2). The SNA network element #1 locally records a quantity X1 of terminal devices that access the second network via the SNA network element #1. For example, the SNA #1 sets a counter, the counter is for recording the quantity of terminal devices that have accessed the second network via the SNA network element #1, and an initial value X1 of the counter is 0. When the SNA network element #1 allows the terminal device to access the second network, the SNA network element #1 updates a value of the counter to X1+1. Similarly, the SNA network element #2 locally records a quantity X2 of terminal devices that have accessed the second network via the SNA network element #2. The SNA network element #1 receives X2 from the SNA network element #2. For example, the SNA network element #1 receives X2 from the SNA network element #2 by using methods similar to the foregoing manners 3.1 to 3.3. For example, after receiving the first request message, the SNA network element #1 sends, to the SNA network element #2, a message for requesting X2, so that the SNA network element #2 sends X2 to the SNA network element #1. Accordingly, the SNA network element #1 receives X2 from the SNA network element #2, and adds X2 and recorded locally X1, to obtain X=X1+X2. It should be understood that the sub-network operator domain 130 may further include more SNA network elements, and the SNA network element #1 may obtain X by using a similar method. Details are not described herein again.

After obtaining X, the second network element may determine whether X is less than M, that is, whether the condition 3.3 is satisfied. Optionally, when X is greater than or equal to M, the second network element directly determines that the condition 3.3 is not satisfied, and therefore does not send the second request message to the third network element; or the second network element selects one or more terminal devices from the terminal devices that have accessed the second network, and disconnects the one or more terminal devices from the second network, so that X is less than M.

For example, the user information of the second network includes the identification information of the one or more terminal devices allowed to establish the connection with the second network and a corresponding priority. After the second network element receives the first request message that is for requesting to establish a connection between a terminal device #1 and the second network, if X is greater than or equal to M, the second network element selects, based on the user information of the second network, one or more terminal devices whose priorities are lower than a priority of the terminal device #1. Then, the second network element sends, to the one or more terminal devices, information indicating to be disconnected from the second network, or the second network element sends, to the third network element, information indicating to disconnect the one or more terminal devices from the second network, so that X is less than M. It should be understood that, in this embodiment of this application, how the second network element selects the terminal device to be disconnected from the second network is not limited. For example, the second network element may alternatively determine, based on factors such as duration of a connection between a terminal device and the second network and data transmission load, whether to disconnect the terminal device from the second network. It should be further understood that the second network element may trigger the fourth network element or the third network element to select one or more terminal devices from the terminal devices that have accessed the second network, and disconnect the one or more terminal devices from the second network. This is not limited in this embodiment of this application.

Optionally, when the second network element determines that X is less than M, the second network element sends an update request message to the fourth network element, where the update request message is for requesting to update X. In this implementation, the condition 3.3 may be replaced with the following: X is less than M, and X is successfully updated.

Accordingly, the fourth network element receives the update request message from the second network element, and updates X based on the update request message. For example, the fourth network element updates X to X+1. Optionally, when updated X is less than or equal to M, the fourth network element updates X based on the update request message. That is, before updating X based on the update request message, the fourth network element determines whether updated X is less than or equal to M if X is updated. For example, when X+1 is less than or equal to M, the fourth network element updates X to X+1; or when X+1 is greater than M, the fourth network element does not update X.

Optionally, the fourth network element sends an update response message to the second network element, to indicate a result of updating X. For example, when the fourth network element completes the update on X (for example, when X+1 is less than or equal to M), the update response message indicates that the update is completed or that the update succeeds; or when the fourth network element does not update X (for example, when X+1 is greater than M), the update response message indicates that the update fails or the update is rejected, and the update response message may further include a cause value. For example, the cause value is exceeding the maximum quantity of terminal devices allowed to simultaneously access the second network.

Accordingly, the second network element receives the update response message from the fourth network element, determines, based on the update response message, whether X is successfully updated, and then determines whether to send the second request message to the third network element.

When the second network element sends the update request message to the fourth network element, and does not receive the update response message from the fourth network element in a specified time period, the second network element may consider by default that the update fails, and does not send the second request message to the third network element. For example, the second network element starts a timer after sending the update request message to the fourth network element. When the timer expires, if the second network element has not received the update response message from the fourth network element, the second network element considers by default that the update fails. A value of the timer may be specified in a protocol, may be negotiated by the second network element and the fourth network element, or may be configured in a system. This is not limited in this embodiment of this application.

Alternatively, when the second network element sends the update request message to the fourth network element, and does not receive the update response message from the fourth network element in a specified time period, the second network element may consider by default that the update succeeds. For a specific implementation, refer to the foregoing descriptions. Details are not described herein again.

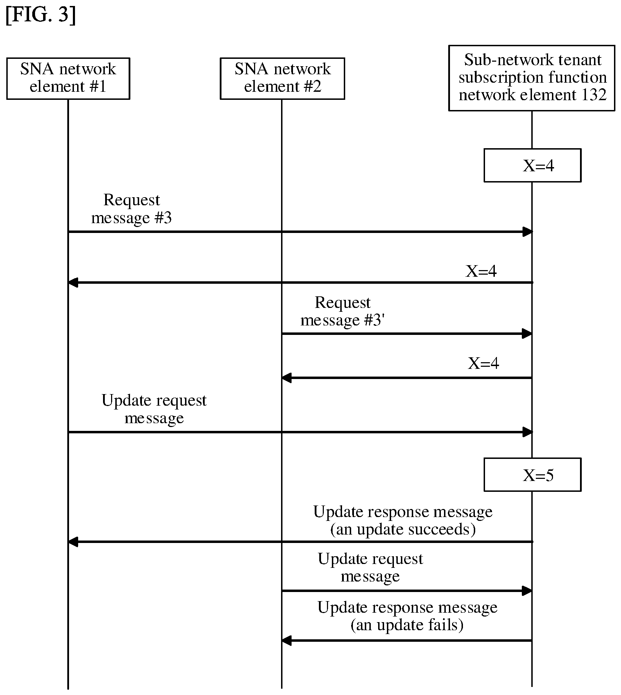

The second network element determines, based on the result of updating X, whether to send the second request message to the third network element, to avoid a conflict. As shown in FIG. 3, for example, the second network element is the SNA network element 131 (denoted as the SNA network element #1) in FIG. 1, the sub-network operator domain 130 further includes the another SNA network element (denoted as the SNA network element #2), the fourth network element is the sub-network tenant subscription function network element 132, X=4, and M=5. After receiving a message for requesting access of the terminal device #1 to the second network, the SNA network element #1 sends a query message #2 to the sub-network tenant subscription function network element 132, to request X. The sub-network tenant subscription function network element 132 sends X=4 to the SNA network element #1, and the SNA network element #1 determines that X is less than M, and sends the update request message to the sub-network tenant subscription function network element 132. The sub-network tenant subscription function network element 132 updates X to X=5 based on the update request message, and sends, to the SNA network element #1, the update response message indicating that X is successfully updated. In this way, the SNA network element #1 can send the second request message to the third network element, to promote a procedure of the access of the terminal device #1 to the second network.

Similarly, after receiving a message for requesting access of a terminal device #2 to the second network, the SNA network element #2 sends a query message #2' to the sub-network tenant subscription function network element 132, to request X. When the sub-network tenant subscription function network element 132 receives the query message #2' before receiving the update request message of the SNA network element #1, the sub-network tenant subscription function network element 132 sends X=4 to the SNA network element #2, and the SNA network element #2 determines that X is less than M, and also sends an update request message to the sub-network tenant subscription function network element 132. In this case, the sub-network tenant subscription function network element 132 has updated X to X=5 based on the update request message of the SNA network element #1. X+1 is greater than M. Therefore, the sub-network tenant subscription function network element 132 sends, to the SNA network element #2, a message indicating an update on X fails, so that the SNA network element #2 does not allow the terminal device #2 to access the second network. In this way, a case in which a quantity of terminal devices that simultaneously access the second network after both the terminal device #1 and the terminal device #2 access the second network exceeds the maximum quantity of terminal devices supported by the second network can be avoided, to reduce a possibility of network congestion, and ensure network performance.

Optionally, the condition 3.3 may be replaced with a **condition 3.3a:** A quantity Y of terminal devices that have accessed the second network via the second network element is less than a maximum quantity N of terminal devices allowed to access the second network via the second network element, where Y and N are non-negative integers. In this implementation, the communication method 200 may further include: The second network element obtains the maximum quantity N of terminal devices allowed to access the second network via the second network element.

For example, the fourth network element sends N to the second network element. Accordingly, the second network element receives N from the fourth network element, where N may be determined based on the maximum quantity M that is of terminal devices allowed to simultaneously access the second network and that is in the subscription data of the second network.

The following uses an example in which the second network element is the SNA network element 131 (denoted as the SNA network element #1) in FIG. 1, the sub-network operator domain 130 further includes the another SNA network element (denoted as the SNA network element #2), and the fourth network element is the sub-network tenant subscription function network element 132, to describe implementations in which the second network element determines whether the condition 3.3a is satisfied.

The sub-network tenant subscription function network element 132 sends first quota information to the SNA network element #1, where the first quota information indicates that the maximum quantity of terminal devices allowed to access the second network via the SNA network element #1 is N. Similarly, the sub-network tenant subscription function network element 132 sends second quota information to the SNA network element #2, where the second quota information indicates a maximum quantity of terminal devices allowed to access the second network via the SNA network element #2 is N'. N and N' are non-negative integers, and a sum of N and N' is less than or equal to M.

The SNA network element #1 locally records the quantity Y of terminal devices that access the second network via the SNA network element #1. For example, after initial instantiation or after receiving the first quota information, the SNA #1 sets an initial value Y of a counter to 0, and the counter is for recording the quantity of terminal devices that access the second network via the SNA network element #1. When the SNA network element #1 allows the terminal device to access the second network, the SNA network element #1 updates a value of the counter to Y+1.

When the SNA network element #1 determines whether the condition 3.3a is satisfied, the SNA network element #1 queries for the locally recorded Y value, to determine whether Y is less than N. When Y is less than N, the SNA network element #1 determines that the condition 3.3a is satisfied; or when Y is greater than or equal to N, the SNA network element #1 determines that the condition 3.3a is not satisfied.

Optionally, when Y is greater than or equal to N, the SNA network element #1 may alternatively send, to the sub-network tenant subscription function network element 132, a quota increase request message. The quota increase request message may include a quota n that is requested to be increased by. When the quota increase request message does not include the quota n that is requested to be increased by, it may indicate that the quota that is requested to be increased by is 1.

Accordingly, the sub-network tenant subscription function network element 132 receives the quota increase request message from the SNA network element #1, and sends a response message to the SNA network element #1 based on the message, where the response message indicates that the quota increase succeeds, or the response message indicates that the quota increase is rejected or that the quota increase fails.

For example, when N+n+N' is less than or equal to M, the sub-network tenant subscription function network element 132 sends, to the SNA network element #1, a response message indicating that the quota increase succeeds. Optionally, the response message includes the quota n that is increased by. For another example, when N+n+N' is greater than M, the sub-network tenant subscription function network element 132 sends, to the SNA network element #1, a response message indicating that the quota increase is rejected or that the quota increase fails. For still another example, when N+n'+N' is less than or equal to M, regardless of whether N+n+N' is greater than M, the sub-network tenant subscription function network element 132 may send, to the SNA network element #1, a response message including a quota n' that is increased by, where the response message indicates that a quota that can be increased by for the SNA network element #1 is n'.

Then, the SNA network element #1 receives the response message from the sub-network tenant subscription function network element 132, and determines, based on the response message, whether the condition 3.3a is satisfied.

For example, when the response message indicates that the quota increase is rejected or that the quota increase fails, the SNA network element #1 determines that the condition 3.3a is not satisfied. When the response message indicates that the quota increase succeeds, the SNA network element #1 determines that the condition 3.3a is satisfied. When the response message includes the quota n (or n') that is increased by, the SNA network element #1 may update N to N+n (or N+n').

When the condition #1 includes a plurality of conditions in the condition 3.1 (or the condition 3.1a), the condition 3.2, and the condition 3.3 (or the condition 3.3a), a sequence of determining the plurality of conditions by the second network element is not limited in this embodiment of this application. For example, the second network element first obtains the user information of the second network, and performs determining on the condition 3.1 (or the condition 3.1a); and when the condition 3.1 (or the condition 3.1a) is satisfied, further obtains the subscription data of the second network, and performs determining on the condition 3.2 and/or the condition 3.3. For another example, the second network element first performs determining on the condition 3.3a; and when the condition 3.3a is satisfied, obtains the user information of the second network and the subscription data of the second network, and performs determining on the condition 3.1 (or the condition 3.1a) and/or the condition 3.2. In this way, a case in which the second network element unnecessarily obtains the user information of the second network and/or the subscription data of the second network can be avoided, to reduce signaling overheads, and improve resource utilization.

The user information of the second network and the subscription data of the second network may be sent to the second network element via a same message, or may be sent to the second network element via different messages. This is not limited in this embodiment of this application. Optionally, the subscription data of the second network includes the user information of the second network. In this way, the second network element can simultaneously obtain the user information of the second network and the subscription data of the second network, to improve information transmission efficiency, and simplify a procedure. In this implementation, when the user information of the second network in the subscription data of the second network is default, it may indicate that all the terminal devices are allowed to access the second network. That is, the second network allows the unsubscribed terminal device to access the second network. In this case, the second network element may consider that the condition 3.1a is satisfied.

The quantity X of terminal devices that have accessed the second network and the user information of the second network may be sent to the second network element via a same message, or may be sent to the second network element via different messages. This is not limited in this embodiment of this application. For example, the query message #1 and the query message #2 may be one request message. That is, the second network element simultaneously requests the user information of the second network and X from the fourth network element. The fourth network element sends the user information of the second network and X to the second network element via a same message. Similarly, the quantity X of terminal devices that have accessed the second network and the subscription data of the second network may be sent to the second network element via a same message, or may be sent to the second network element via different messages. Details are not described herein again.

In another implementation, the second network element receives information indicating that the terminal device is allowed to access the second network, and then sends the second request message to the third network element. For example, the second network element receives, from the fourth network element, the information indicating that the terminal device is allowed to access the second network. For example, after receiving the first request message, the second network element forwards information (for example, the identification information of the terminal device, the identification information of the second network, the location information of the terminal device, and the identification information of the first network) in the first request message to the fourth network element. Accordingly, the fourth network element receives the information in the first request message from the second network element, and determines, based on the information, whether to allow the terminal device to access the second network. The fourth network element may determine, based on the condition #1, whether to allow the terminal device to access the second network, or may determine, based on another condition or a local configuration, whether to allow the terminal device to access the second network. When determining to allow the terminal device to access the second network (for example, the condition #1 is satisfied), the fourth network element sends, to the second network element, the information indicating that the terminal device is allowed to access the second network. When determining not to allow the terminal device to access the second network (for example, the condition #1 is not satisfied), the fourth network element may send, to the second network element, information indicating that the terminal device is not allowed to access the second network or the access of the terminal device to the second network is rejected. For an implementation in which the fourth network element determines, based on the condition #1, whether to allow the terminal device to access the second network, refer to the foregoing descriptions of performing determining on the condition #1 by the second network element. Details are not described herein again.

Optionally, before the second network element sends the second request message to the third network element in the second network based on the first request message, the communication method 200 further includes: The second network element obtains address information of the third network element. For example, the second network element may obtain the address information of the third network element in one of the following manners 3.4 to 3.7.

**Manner 3.4:** The second network element obtains the address information of the third network element from locally maintained data.

For example, the second network element locally stores a correspondence between the identification information of the second network and the address information of the third network element, and the second network element determines the address information of the third network element based on the identification information of the second network in the first request message and the correspondence.

**Manner 3.5:** The second network element receives the address information of the third network element from the fourth network element.

For example, the second network element receives the subscription data of the second network from the fourth network element, where the subscription data of the second network includes the address information of the third network element.

For another example, the fourth network element sends the subscription data of the second network and the address information of the third network element to the second network element in response to a message that is sent by the second network element and that is for requesting the subscription data of the second network, where the address information of the third network element and the subscription data of the second network may be included in a same message, or may be included in different messages.

For still another example, before the second network element sends the second request message to the third network element, the second network element sends, to the fourth network element, a message for requesting the address information of the third network element, where the message may include the identification information of the second network. Accordingly, the fourth network element receives, from the second network element, the message for requesting the address information of the third network element, obtains the address information of the third network element from locally maintained data based on the message, for example, based on the identification information of the second network in the message, and sends the address information of the third network element to the second network element.

**Manner 3.6:** The second network element receives the address information of the third network element sent by a network element #2.

For example, the sub-network operator domain 130 in FIG. 1 further includes the network element #2, and the network element #2 may be configured to maintain real-time information of a network function and a service in the sub-network operator domain 130. For a specific function, refer to an NRF network element in a 5G system. Details are not described herein again.

For example, the third network element or the network element #1 sends the address information of the third network element and the identification information of the second network to the network element #2. Accordingly, the network element #2 receives the identification information of the second network and the address information of the third network element from the third network element or the network element #1. Further, the network element #2 may store a correspondence between the identification information of the second network and the address information of the third network element. The network element #1 is configured to operate, administrate, and maintain the sub-network operator domain 130. For a specific function of the network element #1, refer to the OAM network element in the 5G network.

Before the second network element sends the second request message to the third network element, the second network element sends, to the network element #2, a message for querying for the address information of the third network element, where the message includes the identification information of the second network. Accordingly, the network element #2 receives, from the second network element, the message for querying for the address information of the third network element, determines the corresponding address information of the third network element based on the identification information of the second network in the message, and sends the address information of the third network element to the second network element.

**Manner 3.7:** The second network element receives the address information of the third network element sent by the DNS.

For example, the third network element or the network element #1 generates a second FQDN based on the identification information of the second network, and sends the second FQDN and the address information of the third network element to the DNS, that is, registers the second FQDN and the address information of the third network element with the DNS. Accordingly, the DNS receives the second FQDN and the address information of the third network element that are sent by the third network element. Further, the DNS may further store a correspondence between the address information of the third network element and the second FQDN.

Before the second network element sends the second request message to the third network element, the second network element generates the second FQDN based on the identification information of the second network, and sends, to the DNS, a message for querying for the address information of the third network element, where the message includes the second FQDN. A manner in which the second network element generates the second FQDN is the same as a manner in which the third network element generates the second FQDN.

Accordingly, the DNS receives, from the second network element, the message for querying for the address information of the third network element, and determines the address information of the third network element based on the second FQDN in the message, for example, determines, based on the second FQDN in the message and the locally stored correspondence, the address information that is of the third network element and that corresponds to the second FQDN. Then, the DNS sends the address information of the third network element to the second network element.

The second request message may be for requesting the access of the terminal device to the second network, or may be for requesting the establishment of the connection between the terminal device and the second network, that is, may be for requesting to establish the connection between the terminal device and the second network.

Optionally, the second request message includes the identification information of the terminal device. The identification information of the terminal device may be the first identification information of the terminal device or the second identification information of the terminal device.

Optionally, the second request message includes the location information of the terminal device. For example, when the first request message includes the location information of the terminal device, the second network element sends the location information of the terminal device to the third network element via the second request message.

Optionally, the second request message includes the identification information of the serving PLMN of the terminal device, namely, the identification information of the first network. For example, the identification information of the first network may be carried in the first request message, or may be obtained by the second network element based on a source address of the first request message.

When the location information of the terminal device is the identity of the cell in which the terminal device is currently located or the TAI, because the identity of the cell and the TAI identity are unique in the PLMN, the third network element may uniquely determine the current location of the terminal device based on the location information of the terminal device and the identification information of the first network.

Optionally, the second request message includes the information indicating the target logical zone of the terminal device, for example, the identification information of the target logical zone. For example, when the first request message includes the identification information of the target logical zone, the second request message includes the identification information of the target logical zone. For example, the second request message includes the first container in the first request message.

When the first request message includes the first tunnel information allocated by the first user plane network element to the sub-network connection of the terminal device, the second request message further includes the first tunnel information. For example, the second network element sends the first tunnel information in the first request message to the third network element via the second request message.

Optionally, when the condition #1 is not satisfied, the communication method 200 further includes the following steps S233 and S234 (not shown in the figure).

S233: The second network element sends a response message #1 to the first network element. Accordingly, the first network element receives the response message #1 from the second network element.

The response message #1 indicates that the access of the terminal device to the second network is rejected, indicates that the access of the terminal device to the second network fails, or indicates that the establishment of the connection between the terminal device and the second network fails. Optionally, the response message #1 includes a cause value, where the cause value indicates a cause of the rejection of the access of the terminal device to the second network.

S234: In response to the response message #1, the first network element sends a connection establishment response message to the terminal device. Accordingly, the terminal device receives the connection establishment response message from the first network element.

The connection establishment response message indicates that the access of the terminal device to the second network is rejected, indicates that the access of the terminal device to the second network fails, or indicates that the establishment of the connection between the terminal device and the second network fails. The terminal device may determine, based on the connection establishment response message, that the request for accessing the second network is rejected. Optionally, the connection establishment response message includes the cause value, where the cause value indicates the cause of the rejection of the access of the terminal device to the second network. For example, the first network element sends the cause value in the response message #1 to the terminal device via the connection establishment response message.

**S240:** The third network element determines, based on the second request message and the subscription data of the terminal device, whether to accept the establishment of the connection between the terminal device and the second network.

The subscription data of the terminal device may be subscription data created when the terminal device subscribes to the second network. It should be understood that the subscription data of the terminal device may be dynamically updated after being created. The subscription data of the terminal device may alternatively be default subscription data.

Before the third network element determines, based on the second request message and the subscription data of the terminal device, whether to accept the establishment of the connection between the terminal device and the second network, the communication method 200 may further include: The third network element obtains the subscription data of the terminal device.

For example, the third network element receives the subscription data of the terminal device from the fifth network element. The fifth network element may be the SSPM network element 121 in FIG. 1, and is configured to maintain user subscription data of the second network, where the user subscription data of the second network includes subscription data of a terminal device that subscribes to the second network and/or the default subscription data. For example, when the second network allows the unsubscribed terminal device to access the second network, the fifth network element maintains the default subscription data.

For example, the third network element sends a query message #3 to the fifth network element, where the query message #3 is for querying for or requesting the subscription data of the terminal device. Optionally, the query message #3 includes the identification information of the terminal device. Accordingly, the fifth network element receives the query message #3, obtains the subscription data of the terminal device based on the query message #3, and sends the subscription data of the terminal device to the third network element.

In an implementation, the terminal device has subscribed to the second network, and the fifth network element maintains the subscription data created when the terminal device subscribes to the second network. Based on the identification information of the terminal device in the query message #3, the fifth network element determines that subscription data corresponding to the identification information of the terminal device is the subscription data of the terminal device, or determines that subscription data including the identification information of the terminal device is the subscription data of the terminal device.

In another implementation, the fifth network element sends the default subscription data to the third network element based on the identification information of the terminal device in the query message #3. For example, the fifth network element determines that the terminal device does not subscribe to the second network, and then sends the default subscription data to the third network element. When the fifth network element does not find subscription data corresponding to the identification information of the terminal device, or does not find subscription data including the identification information of the terminal device, the fifth network element may determine that the terminal device does not subscribe to the second network. Accordingly, the third network element receives the default subscription data sent by the fifth network element, and uses the default subscription data as the subscription data of the terminal device.

The subscription data of the terminal device includes any one or more of the following information:
(1) Identification information of the terminal device: identifies the terminal device. The identification information of the terminal device may be the first identification information of the terminal device or the second identification information of the terminal device. It should be noted that the default subscription data does not include an identifier of the terminal device.
(2) Authentication indication information: indicates whether the second network needs to perform authentication on the terminal device.
(3) Authentication information: includes information related to the authentication on the terminal device, for example, an authentication key and an authentication method (for example, extensible authentication protocol authentication and key agreement (extensible authentication protocol authentication and key agreement, EAP AKA) or certificate-based authentication) for performing authentication on the terminal device. It should be noted that, when the authentication indication information indicates that the second network needs to perform authentication on the terminal device, the subscription data of the terminal device may further include the authentication information; or when the authentication indication information indicates that the second network does not need to perform authentication on the terminal device, the subscription data of the terminal device does not include the authentication information. It should be further noted that, when the second network needs to perform authentication on the terminal device, the subscription data of the terminal device may include only the authentication information, and does not include the authentication indication information. That is, the third network element may determine, based on the subscription data of the terminal device including the authentication information, that the authentication needs to be performed on the terminal device. Authentication information in the default subscription data does not include the authentication key, and the authentication method may be the certificate-based authentication.
(4) Access permission information: indicates a sub-network area that the terminal device is allowed to access and/or is prohibited from accessing.

The access permission information may include logical zone restriction information, where the logical zone restriction information indicates a logical zone that the terminal device is allowed to access, and/or the logical zone restriction information indicates a logical zone that the terminal device is prohibited from accessing.

The following describes representation forms of the logical zone restriction information by using examples.

**Example 4.1:** The logical zone restriction information includes an identifier corresponding to the logical zone that the terminal device is allowed to access, and/or the logical zone restriction information includes an identifier corresponding to the logical zone that the terminal device is prohibited from accessing.

**Example 4.2:** The logical zone restriction information includes an identifier of each logical zone in the second network and indication information corresponding to the identifier of the logical zone. The indication information indicates whether the terminal device is allowed to access a corresponding logical zone. Optionally, the indication information is one bit. When a value of the bit is a first value (for example, 1), it indicates that the terminal device is allowed to access the corresponding logical zone. When a value of the bit is a second value (for example, 0), it indicates that the terminal device is prohibited from accessing the corresponding logical zone. For example, Table 1 shows logical zone restriction information of the terminal device 140, where the logical zone restriction information indicates that the terminal device 140 is allowed to access logical zones #a and #c and is prohibited from accessing a logical zone #b.

**Table 1**

| Identifier of a logical zone | Indication information |
|---|---|
| #a | Allowed/1 |
| #b | Prohibited/0 |
| #c | Allowed/1 |

**Example 4.3:** The second network includes a plurality of logical zones at different levels, and a logical zone at each level includes one or more logical zones. The logical zone restriction information indicates a level of the logical zone that the terminal device is allowed to access, or the logical zone restriction information indicates a highest level/a lowest level of the logical zone that the terminal device is allowed to access.

For example, the second network includes a logical zone #a, a logical zone #b, and a logical zone #c, where a level of the logical zone #a is 1, a level of the logical zone #b is 2, and a level of the logical zone #c is 3. When the logical zone restriction information indicates that the level of the logical zone that the terminal device is allowed to access is 1, the terminal device is allowed to access the logical zone #a, and the terminal device is prohibited from accessing the logical zone #b and the logical zone #c. When the logical zone restriction information indicates that the highest level of the logical zone that the terminal device is allowed to access is 2, the terminal device is allowed to access the logical zone #a and the logical zone #b, and the terminal device is not allowed to access the logical zone #c.

The access permission information may further include sub-network geographic area restriction information. The coverage of the second network may include a plurality of sub-network geographic areas, different terminal devices may be allowed to access different sub-network geographic areas, and a same terminal device may access one or more sub-network geographic areas. The geographic area may be a cell or a tracking area.

The sub-network geographic area restriction information indicates one or more sub-network geographic areas that the terminal device is allowed to access, and/or the logical zone restriction information indicates one or more sub-network geographic areas that the terminal device is prohibited from accessing. For an example of the sub-network geographic area restriction information, refer to the descriptions of the logical zone restriction information. Details are not described herein again.

It should be understood that the access permission information may include both the logical zone restriction information and the sub-network geographic area restriction information. For example, if the logical zone restriction information indicates that the logical zone that the terminal device is allowed to access is a green zone, and the sub-network geographic area restriction information indicates that the sub-network geographic area that the terminal device is allowed to access is a sports hall, the terminal device may access a green zone of a network covering the sports hall.

(5) QoS parameter of the terminal device: The subscription data of the terminal device may include one or more groups of QoS parameters, and each group of QoS parameters includes but is not limited to one or more of information (for example, a 5QI or a QCI) indicating a QoS level, a scheduling priority, a maximum allowed bandwidth, a preemption priority, and other information. For specific descriptions of the QoS parameter, refer to an existing protocol. Details are not described herein again. The group of QoS parameters may be referred to as a QoS profile, and the subscription data of the terminal device may include an identifier of the one or more QoS profiles.

That the third network element determines whether to accept the establishment of the connection between the terminal device and the second network may be: When a condition #2 is satisfied, the third network element determines to accept the establishment of the connection between the terminal device and the second network. That is, the third network element determines to accept the access of the terminal device to the second network. When the condition #2 is not satisfied, the third network element determines not to accept the establishment of the connection between the terminal device and the second network. That is, the third network element determines to reject the access of the terminal device to the second network.

The condition #2 includes one or two of the following conditions 4.1 and 4.2.

**Condition 4.1:** The second request message and the subscription data of the terminal device satisfy a third condition, where the third condition includes one or two of the following conditions:
Condition 4.1.1: The second request message includes the location of the terminal device, the subscription data of the terminal device includes information indicating one or more geographic areas that the terminal device is allowed to access, and the one or more geographic areas that the terminal device is allowed to access include the location of the terminal device.

For example, the second request message includes the location information of the terminal device, the subscription data of the terminal device includes the sub-network geographic area restriction information, and the sub-network geographic area restriction information indicates the one or more sub-network geographic areas that the terminal device is allowed to access. The third network element determines, based on the location information of the terminal device and the sub-network geographic area restriction information, that the current location of the terminal device belongs to the geographic area that the terminal device is allowed to access.

The condition 4.1.1 may alternatively be replaced with the following: The second request message includes the location of the terminal device, the subscription data of the terminal device includes information indicating one or more geographic areas that the terminal device is prohibited from accessing, and the one or more geographic areas that the terminal device is prohibited from accessing do not include the location of the terminal device.

Condition 4.1.2: The second request message includes the information indicating the logical zone that the terminal device requests to access, the subscription data of the terminal device includes information indicating one or more logical zones that are in the second network and that the terminal device is allowed to access, and the one or more logical zones that the terminal device is allowed to access include the logical zone that the terminal device requests to access.

For example, the second request message includes the information indicating the target logical zone of the terminal device, the subscription data of the terminal device includes the logical zone restriction information, and the logical zone restriction information indicates one or more logical zones that the terminal device is allowed to access. The third network element determines that the target logical zone of the terminal device belongs to the logical zone that the terminal device is allowed to access.

The condition 4.1.2 may alternatively be replaced with the following: The second request message includes the information indicating the logical zone that the terminal device requests to access, the subscription data of the terminal device includes information indicating one or more logical zones that are in the second network and that the terminal device is prohibited from accessing, and the one or more logical zones that the terminal device is prohibited from accessing do not include the logical zone that the terminal device requests to access.

**Condition 4.2:** The authentication does not need to be performed on the terminal device, or the terminal device is successfully authenticated.

For example, the third network element determines whether the authentication does not need to be performed on the terminal device, and performs authentication on the terminal device when determining that the authentication needs to be performed on the terminal device.

For example, when any one of the following conditions 4.2.1 to 4.2.3 is satisfied, the third network element determines that the authentication does not need to be performed on the terminal device; or when none of the following conditions 4.2.1 to 4.2.3 is satisfied, the third network element determines that the authentication needs to be performed on the terminal device.

Condition 4.2.1: The subscription data of the terminal device includes the authentication indication information, and the authentication indication information indicates that the authentication does not need to be performed on the terminal device; the subscription data of the terminal device does not include the authentication indication information indicating that the authentication needs to be performed on the terminal device; or the subscription data of the terminal device does not include the authentication information.

Condition 4.2.2: The second request message includes the first identification information of the terminal device, and the first identification information is trusted.

For an implementation in which the third network element determines that the first identification information of the terminal device is trusted, refer to the descriptions in step S220. Details are not described herein again.

Condition 4.2.3: The second network does not need to perform authentication on any terminal device that requests to access the second network.

Optionally, when the subscription data of the terminal device includes the authentication information, the third network element performs authentication on the terminal device based on the authentication information. For example, the third network element performs authentication on the terminal device based on the authentication key in the authentication information and the authentication method indicated by the authentication information.

The third network element may obtain all subscription data of the terminal device at a time, or may separately obtain different content in the subscription data of the terminal device. For example, the third network element first obtains authentication-related content in the subscription data of the terminal device, for example, the authentication indication information and/or the authentication information, and determines whether the condition 4.2 is satisfied. If the condition 4.2 is not satisfied, the third network element determines not to accept the establishment of the connection between the terminal device and the second network. If the condition 4.2 is satisfied, the third network element further obtains other content in the subscription data of the terminal device, for example, the access permission information, and determines whether the condition 4.1 is satisfied. In this way, a case in which the third network element obtains unnecessary content in the subscription data can be avoided.

**S250:** The third network element sends a first response message to the second network element, where the first response message indicates whether the establishment of the connection between the terminal device and the second network is accepted.

For example, when the third network element determines to accept the establishment of the connection between the terminal device and the second network, the third network element sends the first response message to the second network element, where the first response message indicates that the establishment of the connection is accepted. It should be understood that the first response message may alternatively indicate that the establishment of the connection succeeds, indicate that an access request of the terminal device is accepted, indicate that the access of the terminal device succeeds, or indicate that the establishment of the sub-network connection of the terminal device is accepted.

For another example, when the third network element determines not to accept the establishment of the connection between the terminal device and the second network, the third network element sends the first response message to the second network element, where the first response message indicates that the establishment of the connection is rejected. It should be understood that the first response message may alternatively indicate that the establishment of the connection fails, indicate that an access request of the terminal device is rejected, indicate that the access of the terminal device fails, or indicate that the establishment of the sub-network connection of the terminal device is rejected.

Optionally, when the third network element determines to accept the establishment of the connection between the terminal device and the second network, the first response message includes one or more of the following information: information indicating the logical zone that the terminal device is allowed to access, second tunnel information, or the QoS parameter of the terminal device. For example, when the condition #2 includes the condition 4.1.2, and the second request message and the subscription data of the terminal device do not satisfy the condition 4.1.2, the third network element determines, based on the logical zone restriction information in the subscription data of the terminal device, the logical zone that the terminal device is allowed to access, and uses the first response message to carry an identifier of the determined logical zone.

Optionally, when the subscription data of the terminal device includes the logical zone restriction information, and the second request message does not include the information indicating the target logical zone of the terminal device, the third network element may determine, based on the logical zone restriction information, the logical zone that the terminal device is allowed to access, and uses the first response message to carry the identifier of the determined logical zone.

For example, the first response message includes a second container, and the second container includes the information indicating the logical zone that the terminal device is allowed to access, for example, the identifier of the logical zone that the terminal device is allowed to access. The second container is to be transparently transmitted to the terminal device. That is, after receiving the second container, a network element or a device other than the terminal device does not parse content in the second container.

The second tunnel information is for transmission of the sub-network service data of the terminal device. That is, the second tunnel information is for sending uplink data of the sub-network service to the second user plane network element. The first user plane network element may send the sub-network service data to the second user plane network element based on the second tunnel information.

The second tunnel information may be allocated by the second user plane network element (for example, the sub-network UP network element 122 in FIG. 1) in the second network to the sub-network connection of the terminal device. For example, before the third network element sends the first response message to the second network element, the communication method 200 further includes: The third network element sends indication information #2 to the second user plane network element. Accordingly, the second user plane network element receives the indication information #2 from the third network element.

The indication information #2 may indicate to allocate tunnel information to the sub-network connection of the terminal device, or the indication information #2 may be for requesting to establish the sub-network connection of the terminal device.

Alternatively, when the second request message includes the first tunnel information, the third network element may send the first tunnel information to the second network element. The second user plane network element may allocate the second tunnel information to the sub-network connection of the terminal device based on the first tunnel information. That is, the second user plane network element may determine, based on the received first tunnel information, that the sub-network connection needs to be established for the terminal device, and further allocate the second tunnel information to the sub-network connection of the terminal device. Optionally, the third network element sends both the first tunnel information and the indication information #2 to the second network element.

Optionally, before the third network element sends the indication information #2 and/or the first tunnel information to the second user plane network element, the third network element may select, from one or more user plane network elements in the second network, the second user plane network element to support the sub-network connection of the terminal device, and forward the sub-network service data between the terminal device and a sub-network service node. For example, the third network element may select the second user plane network element based on one or two of the logical zone that the terminal device is allowed to access and the current location of the terminal device. For another example, a correspondence between a logical zone and the user plane network element in the second network is locally configured on the third network element, and the third network element selects, based on the correspondence, the second user plane network element corresponding to the logical zone that the terminal device is allowed to access, to support the sub-network connection of the terminal device.

The QoS parameter of the terminal device is for determining a quality of service parameter corresponding to the sub-network connection of the terminal device. For example, the third network element determines the QoS parameter of the terminal device based on the subscription data of the terminal device, and sends the QoS parameter of the terminal device to the second network element via the first response message, where the QoS parameter of the terminal device may include a QoS level, the maximum bandwidth, the preemption priority, and the like.

It should be understood that, when the first response message includes one or more of the information indicating the logical zone that the terminal device is allowed to access, the second tunnel information, and a first QoS parameter, the first response message may indicate that the establishment of the connection is accepted. That is, when the second network element receives the first response message, and the first response message includes one or more of the information indicating the logical zone that the terminal device is allowed to access, the second tunnel information, and the first QoS parameter, the second network element may determine that the third network element accepts the establishment of the connection.

Optionally, the communication method 200 further includes: The third network element sends, to the second user plane network element, one or more of a data packet filter, a forwarding rule, and a QoS rule that correspond to the sub-network connection of the terminal device.

The data packet filter is configured to map, to a QoS flow, sub-network service data sent by the sub-network service node, so that the second user plane network element can send the sub-network service data to the first user plane network element by using the QoS flow. The forwarding rule may include a rule for processing the sub-network service data sent by the sub-network service node to the terminal device, for example, adding a QoS flow identifier. The QoS rule may be for controlling QoS of the sub-network connection of the terminal device, for example, controlling maximum uplink and downlink bandwidths of the connection.

For example, the third network element may determine the data packet filter and the forwarding rule based on the access permission information in the subscription data of the terminal device. For example, when the access permission information indicates that the terminal device is not allowed to access the logical zone #a, the data packet filter includes one or more addresses corresponding to the logical zone #a, and the forwarding rule corresponding to the data packet filter indicates to discard a data packet, a sub-network service data packet from the terminal device is discarded, based on the indication of the forwarding rule corresponding to the data packet filter, when the second user plane network element receives the sub-network service data packet, and the second user plane network element determines, based on the data packet filter, that a destination address of the sub-network service data packet belongs to the address corresponding to the logical zone #a, to avoid the access of the terminal device to the logical zone #a.

**S260:** The second network element sends a second response message to the first network element based on the first response message, where the second response message indicates whether the establishment of the connection is accepted. Accordingly, the first network element receives the second response message from the second network element.

For example, when the first response message indicates that the establishment of the connection is rejected, the second response message indicates that the establishment of the connection is rejected. It should be understood that the second response message may alternatively indicate that the establishment of the connection fails, indicate that the access request of the terminal device is rejected, indicate that the access of the terminal device fails, or indicate that the establishment of the sub-network connection of the terminal device is rejected. This is not limited in this embodiment of this application.

For another example, when the first response message indicates that the establishment of the connection is accepted, the second response message indicates that the establishment of the connection is accepted. It should be understood that the second response message may alternatively indicate that the establishment of the connection succeeds, indicate that the access request of the terminal device is accepted, indicate that the access of the terminal device succeeds, or indicate that the establishment of the sub-network connection of the terminal device is accepted. This is not limited in this embodiment of this application.

Optionally, the second response message includes a QoS parameter corresponding to the sub-network connection of the terminal device, and the QoS parameter is determined based on at least one of the following: the QoS parameter of the terminal device or a QoS parameter of the second network.

For example, the subscription data of the second network includes the QoS parameter of the second network, and the second network element determines, based on the QoS parameter of the second network, the QoS parameter corresponding to the sub-network connection of the terminal device.

For another example, the first response message includes the QoS parameter of the terminal device, and the subscription data of the second network includes the QoS parameter of the second network; and when the QoS parameter of the terminal device and the QoS parameter of the second network satisfy a second condition, the QoS parameter corresponding to the sub-network connection of the terminal device is the QoS parameter of the terminal device; or when the QoS parameter of the terminal device and the QoS parameter of the second network do not satisfy a second condition, the QoS parameter corresponding to the sub-network connection of the terminal device is the QoS parameter of the second network, where
the second condition includes one or two of the following conditions:
(1) The QoS level in the QoS parameter of the terminal device is less than or equal to a QoS level in the QoS parameter of the second network; and
(2) the maximum bandwidth in the QoS parameter of the terminal device is less than or equal to a maximum bandwidth in the QoS parameter of the second network.

For clear and brief description, the QoS parameter of the terminal device in the first response message is referred to as the first QoS parameter below, and the QoS parameter of the second network in the subscription data of the second network is referred to as a second QoS parameter below. It should be understood that, when the subscription data of the second network includes one or more groups of second QoS parameters, if the first QoS parameter and at least one group of second QoS parameters satisfy the second condition, the second network element may use the first QoS parameter as the QoS parameter corresponding to the sub-network connection of the terminal device. If neither the first QoS parameter nor all the second QoS parameters satisfy the second condition, the second network element may determine, based on the first QoS parameter and the one or more groups of second QoS parameters, the QoS parameter corresponding to the sub-network connection of the terminal device. For example, if the condition (2) in the second condition is not satisfied, the second network element selects, from a plurality of groups of second QoS parameters, a group with a largest maximum bandwidth value as the QoS parameter corresponding to the sub-network connection of the terminal device.

Alternatively, when the first QoS parameter does not match any second QoS parameter, the second network element may send, to the first network element, the second response message indicating that the establishment of the connection fails.

It should be understood that, when the second response message includes the quality of service parameter corresponding to the sub-network connection of the terminal device, the second response message may indicate that the establishment of the connection is accepted. That is, when the first network element receives the second response message including the quality of service parameter corresponding to the sub-network connection of the terminal device, the first network element determines that the establishment of the connection of the terminal device succeeds.

When the second response message indicates that the establishment of the connection is accepted, the second response message may further include one or more of radio resource information, identification information of the second network element, a charging identifier, the information indicating the logical zone that the terminal device is allowed to access, and the second tunnel information.

The radio resource information indicates a radio resource that is in the first network and that is for forwarding the sub-network service data between the terminal device and the second network. That is, the radio resource is used by the first network to support the connection between the terminal device and the second network, and the radio resource is used by the first network to forward the sub-network service data between the terminal device and the second network.

For example, the radio resource includes one or more data radio bearers (data radio bearers, DRBs) for transmission of the sub-network service data on an air interface between the terminal device and the access network device (for example, the (R)AN 111 in FIG. 1) in the first network. For example, for downlink sub-network service data sent by the second network to the terminal device, after receiving the sub-network service data, the access network device maps the sub-network service data to the one or more DRBs, and sends the sub-network service data to the terminal device via the one or more DRBs. Correspondingly, for uplink sub-network service data sent by the terminal device to the second network, the terminal device maps the sub-network service data to the one or more DRBs, and sends the sub-network service data to the access network device via the one or more DRBs.

The radio resource message may be determined based on the subscription data of the second network. For example, the radio resource message is determined based on radio resource reservation information of the first network.

For example, the second network element determines the radio resource reservation information of the first network in the subscription data of the second network based on the identification information of the first network, and then determines the radio resource information based on the radio resource reservation information. The second network element may determine, based on the first QoS parameter or the second QoS parameter, whether a resource indicated by the radio resource reservation information is used for the sub-network connection of the terminal device. For example, when the QoS level in the first QoS parameter or the second QoS parameter is greater than a preset threshold, the second network element determines that all or a part of radio resources indicated by the radio resource reservation information may be used for the sub-network connection of the terminal device, and then uses the second response message to carry radio resource information corresponding to all or the part of the radio resources. The preset threshold may be specified in the protocol, or may be configured in the system. This is not limited in this embodiment of this application.

The charging identifier indicates to charge a radio resource in the first network, and the radio resource in the first network is for forwarding service data for the second network, that is, is used by the second network to exchange the service data with one or more terminal devices through the first network. For example, the charging identifier has two possible values. When a value of the charging identifier is a first value, it indicates that charging needs to be performed. When a value of the charging identifier is a second value, it indicates that charging does not need to be performed.

Optionally, the second response message includes the information indicating the logical zone that the terminal device is allowed to access. For example, the second network element sends the second container in the first response message to the first network element via the second response message.

Optionally, the second response message includes the second tunnel information. For example, the second network element sends the second tunnel information in the first response message to the first network element via the second response message.

**S270:** The first network element sends a third request message to the access network device in the first network. Accordingly, the access network device receives the third request message from the first network element.

For example, when the second response message indicates that the establishment of the connection is accepted, the first network element sends the third request message to the access network device. The first network element may directly send the third request message to the access network device, or may indirectly send the third request message to the access network device via another network element. For example, the first network element may send the third request message to the access network device via an AMF network element.

The third request message is for requesting to allocate the radio resource to the sub-network connection of the terminal device, and the radio resource is for forwarding the sub-network service data between the terminal device and the second network.

Optionally, the third request message includes the QoS parameter corresponding to the sub-network connection of the terminal device. For example, the first network element sends the first QoS parameter or the second QoS parameter in the second response message to the access network device via the third request message.

Optionally, the third request message includes the radio resource information. For example, the first network element sends the radio resource information in the second response message to the access network device via the third request message. For another example, the first network element maps the radio resource information in the second response message to an internal identifier of the first network, and sends the internal identifier obtained through mapping to the access network device.

Optionally, the third request message includes third tunnel information. The third tunnel information is for transmission of the sub-network service data of the terminal device. That is, the third tunnel information is for sending the uplink data of the sub-network service to the first user plane network element. The access network device may send the sub-network service data of the terminal device to the first user plane network element based on the third tunnel information.

The third tunnel information may be allocated by the first user plane network element to the sub-network connection of the terminal device. In this implementation, before the first network element sends the third request message to the access network device, the communication method 200 further includes the following steps.

S261: The first network element sends the second tunnel information to the first user plane network element. Accordingly, the first user plane network element receives the second tunnel information from the first network element.

S262: The first user plane network element sends, to the first network element, the third tunnel information allocated by the first user plane network element to the sub-network connection of the terminal device. Accordingly, the first network element receives the third tunnel information from the first user plane network element.

For example, after receiving the second tunnel information, the first user plane network element allocates the third tunnel information to the sub-network connection of the terminal device, and sends the allocated third tunnel information to the first network element.

For another example, in step S261, the first network element further sends indication information to the first user plane network element, where the indication information indicates to allocate tunnel information to the sub-network connection of the terminal device. In other words, the indication information is for requesting to allocate the tunnel information to the sub-network connection of the terminal device. Accordingly, the first user plane network element receives the indication information from the first network element, allocates the third tunnel information to the sub-network connection of the terminal device based on the indication information, and sends the allocated third tunnel information to the first network element.

Optionally, the third request message further includes a third response message sent to the terminal device. For example, the third response message is a non-access stratum (non-access stratum, NAS) message. The access network device does not parse the third response message, but directly transparently transmits the third response message to the terminal device.

The third response message may indicate that the access request of the terminal device is accepted, indicate that the terminal device successfully accesses the second network, indicate that the establishment of the connection succeeds, or indicate that the establishment of the sub-network connection of the terminal device is accepted.

When the third response message includes the information indicating the logical zone that the terminal device is allowed to access, the third response message further includes the information indicating the logical zone that the terminal device is allowed to access. For example, the first network element obtains the second container from the second response message, and includes the second container in the third response message.

Optionally, when the second response message indicates that the establishment of the connection is rejected, the first network element sends, to the terminal device, a message indicating that the access fails. For example, the first network element may send, to the terminal device via the access network device, the message indicating that the access fails.

**S280:** The access network device sends a fourth response message to the first network element. Accordingly, the first network element receives the fourth response message from the access network device, where the fourth response message includes fourth tunnel information.

The fourth tunnel information is for transmission of the sub-network service data of the terminal device, that is, for sending the downlink data of the sub-network service to the access network device. The first user plane network element may send the sub-network service data of the terminal device to the access network device based on the fourth tunnel information.

The fourth tunnel information may be tunnel information allocated by the access network device to the sub-network connection of the terminal device. For example, the access network device allocates the fourth tunnel information to the sub-network connection of the terminal device based on the third request message, in other words, when triggered by the third request message.

The access network device may directly send the fourth tunnel information to the first network element, or may indirectly send the fourth tunnel information to the first network element via another network element. For example, the access network device may send the fourth tunnel information to the first network element via the AMF network element.

The communication method 200 may further include: The access network device establishes the radio resource for the sub-network connection of the terminal device with the terminal device.

For example, the access network device allocates the radio resource to the sub-network connection of the terminal device based on the third request message. For example, when the third request message includes the radio resource information, the access network device may allocate the radio resource to the sub-network connection of the terminal device based on the radio resource information. For example, the access network device may allocate, to the sub-network connection of the terminal device, the radio resource indicated by the radio resource information, and subsequently perform transmission of the sub-network service data of the terminal device by using the radio resource. For another example, when the third request message includes the first QoS parameter or the second QoS parameter, the access network device may allocate the radio resource to the sub-network connection of the terminal device based on the first QoS parameter or the second QoS parameter. Alternatively, the access network device may allocate the radio resource to the sub-network connection of the terminal device based on a combination of the first QoS parameter or the second QoS parameter and the radio resource information.

In this implementation, the access network device may further establish the radio resource with the terminal device. For example, the radio resource for the sub-network connection of the terminal device may be established between the access network device and the terminal device by using radio resource control (radio resource control, RRC) connection reconfiguration (RRC connection reconfiguration). For a specific process, refer to the existing protocol. Details are not described herein again.

An execution sequence of sending the fourth response message to the first network element by the access network device and establishing the radio resource with the terminal device by the access network device is not limited in this embodiment of this application. For example, the access network device may send the fourth response message to the first network element after establishment of the radio resource between the access network device and the terminal device is completed. In this implementation, the fourth response message may further indicate that the establishment of the radio resource between the access network device and the terminal device is completed.

When the third request message includes the third response message, the communication method 200 further includes: The access network device sends the third response message to the terminal device. Accordingly, the terminal device receives the third response message from the access network device. The terminal device may determine, based on the third response message, that the terminal device successfully accesses the second network, that is, determine that the establishment of the connection to the second network succeeds, so that the terminal device can exchange the sub-network service data with the second network.

Optionally, the access network device may send the third response message to the terminal device in a process of establishing the radio resource for the sub-network connection with the terminal device.

According to the foregoing steps, the terminal device successfully accesses the second network. That is, the connection between the terminal device and the second network is successfully established. The following describes, by using an example, a process of transmission of the sub-network service data between the terminal device and the second network.

When the uplink sub-network service data arrives at the terminal device, the terminal device sends the sub-network service data to the access network device by using the radio resource established between the terminal device and the access network device. The access network device sends the sub-network service data to the first user plane network element based on the third tunnel information. Then, the first user plane network element sends the sub-network service data to the second user plane network element based on the second tunnel information. Finally, the second user plane network element sends the sub-network service data to the sub-network service node, to complete transmission of the uplink sub-network service data.

Similarly, after receiving the downlink sub-network service data from the sub-network service node, the second user plane network element sends the sub-network service data to the first user plane network element based on the first tunnel information. Then, the first user plane network element sends the sub-network service data to the access network device based on the fourth tunnel information. Then, the access network device sends the sub-network service data to the terminal device by using the radio resource established between the access network element and the terminal device, to complete transmission of the downlink sub-network service data.

According to the communication method 200 provided in this embodiment of this application, the third network element in the second network determines, based on the subscription data of the terminal device, whether to accept the establishment of the connection between the terminal device and the second network, so that the second network can autonomously manage the establishment of the connection between the terminal device and the second network, to reduce complexity of deployment and maintenance of the second network. In some implementations, the second network includes the fourth network element configured to manage the subscription data of the terminal device. That is, the subscription data of the terminal device may be stored in the second network instead of the first network. The third network element may directly obtain the subscription data of the terminal device from the fourth network element, to implement autonomous management of the sub-network connection. Further, the second network element may also control and manage the establishment of the connection between the terminal device and the second network, so that unnecessary signaling overheads can be reduced while processing complexity of the third network element is reduced, and resource utilization is improved.

In addition, in an existing sub-network deployed based on technologies such as slicing, MEC, a LADN, and a standalone non-public network (standalone non-public network, SNPN), only a terminal device that subscribes to a sub-network or a terminal device that has a subscriber identity module (subscriber identity module, SIM) card of the sub-network can access the sub-network. Consequently, an application scenario of the sub-network is limited. Based on the network architecture 100 and the communication method 200 provided in embodiments of this application, a range of terminal devices that access the second network may be expanded. For example, in some implementations, a terminal device that does not subscribe to the second network may also access the second network. In other implementations, the subscription data of the second network includes the identification information of the serving operator of the terminal device, and the terminal device may access the second network. In this way, the application scenario of the sub-network can be expanded, to facilitate development and promotion of the sub-network.

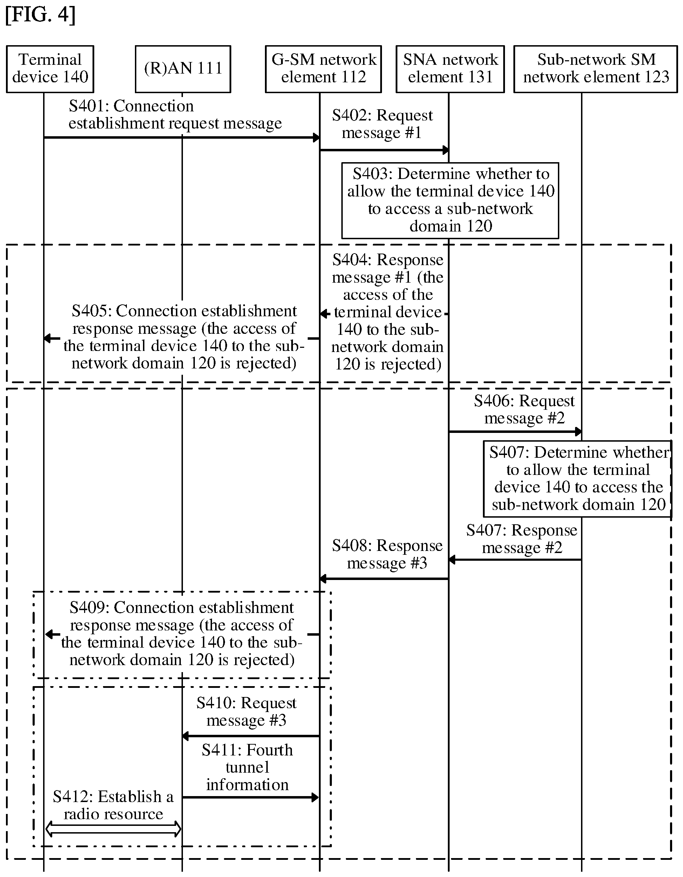

FIG. 4 is a schematic flowchart of another communication method 400 according to an embodiment of this application. The communication method 400 may be considered as a specific implementation of the communication method 200 shown in FIG. 2. In the communication method 400, an example in which a terminal device is the terminal device 140 in FIG. 1, an access network device is the (R)AN 111, a first network is the operator network 110, a first network element is the G-SM network element 112, a second network element is the SNA network element 131, a second network is the sub-network domain 120, and a third network element is the sub-network SM network element 123 is used to describe the specific implementation of the communication method 200. It should be understood that there may be a same or similar technical means between the communication method 400 and the communication method 200. Related descriptions in the communication method 200 are also applicable to the communication method 400. Content that has been described in the communication method 200 is not described again in the communication method 400.

As shown in FIG. 4, the communication method 400 includes the following steps.

**S401:** The terminal device 140 sends a connection establishment request message to the G-SM network element 112. Accordingly, the G-SM network element 112 receives the connection establishment request message from the terminal device 140.

The connection establishment request message is for requesting establishment of a connection between the terminal device 140 and the sub-network domain 120. That is, the connection establishment request message is for requesting to access the sub-network domain 120. The connection between the terminal device 140 and the sub-network domain 120 is referred to as a sub-network connection of the terminal device 140 below.

For example, when the terminal device 140 needs to use a sub-network service provided by the sub-network domain 120, the terminal device 140 sends the connection establishment request message to the G-SM network element 112, to initiate the establishment of the sub-network connection, so that the terminal device 140 can exchange data related to the sub-network service with the sub-network domain 120 through the sub-network connection.

The connection establishment request message includes identification information of the terminal device 140 and identification information of the sub-network domain 120, so that the G-SM network element 112 can learn, by using the connection establishment request message, that a terminal device that initiates the establishment of the connection is the terminal device 140, and a target network that the terminal device 140 requests to access is the sub-network domain 120.

Optionally, the connection establishment request message includes information indicating a target logical zone of the terminal device, for example, an identifier of one or more logical zones that the terminal device requests to access. The terminal device may send, to the G-SM network element 112 by using a container, the information indicating the target logical zone of the terminal device, to improve security.

**S402:** The G-SM network element 112 sends a request message #1 to the SNA network element 131. Accordingly, the SNA network element 131 receives the request message #1 from the G-SM network element 112.

For example, the request message #1 may be the first request message in the communication method 200.

Optionally, before the G-SM network element 112 sends the request message #1 to the SNA network element 131, the G-SM network element 112 obtains address information of the SNA network element 131, for example, an IP address of the SNA network element 131. In this way, the G-SM network element 112 can send the request message #1 to the SNA network element 131 based on the address information of the SNA network element 131. For example, the G-SM network element 112 receives the address information of the SNA network element 131 from a DNS or an NRF network element in the operator network 110. For a specific implementation, refer to the manner 2.1 and the manner 2.2. Details are not described herein again.

Optionally, before the G-SM network element 112 sends the request message #1 to the SNA network element 131, the G-SM network element 112 receives, from a G-UP network element 113, first tunnel information allocated by the G-UP network element 113 to data transmission of the terminal device, and sends the first tunnel information to the SNA network element 131 via the request message #1. For a specific procedure in which the G-SM network element 112 receives the first tunnel information from the G-UP network element 113, refer to steps S221 and S222.

**S403:** The SNA network element 131 determines whether to allow the terminal device 140 to access the sub-network domain 120.

For example, the SNA network element 131 determines, depending on whether a condition #1 is satisfied, whether to allow the terminal device 140 to access the sub-network domain 120. For a specific implementation in which the SNA network element 131 determines whether the condition #1 is satisfied, refer to step S230. Details are not described herein again.

When the condition #1 is not satisfied, the SNA network element 131 determines not to allow the terminal device 140 to access the sub-network domain 120, and the communication method 400 further includes the following steps S404 and S405.

**S404:** The SNA network element 131 sends a response message #1 to the G-SM network element 112. Accordingly, the first network element receives the response message #1 from the second network element.

**S405:** In response to the response message #1, the G-SM network element 112 sends a connection establishment response message to the terminal device 140. Accordingly, the terminal device 140 receives the connection establishment response message from the G-SM network element 112.

The response message #1 and the connection establishment response message indicate that the access of the terminal device 140 to the sub-network domain 120 is rejected. Optionally, the response message #1 and the connection establishment response message include a cause value, indicating a cause of the rejection of the access of the terminal device 140 to the sub-network domain 120. For detailed descriptions of the response message #1 and the connection establishment response message, refer to steps S233 and S234.

When the condition #1 is satisfied, the SNA network element 131 determines to allow the terminal device 140 to access the sub-network domain 120, and the communication method 400 further includes the following steps S406 to S412.

**S406:** The SNA network element 131 sends a request message #2 to the sub-network SM network element 123. Accordingly, the sub-network SM network element 123 receives the request message #2 from the SNA network element 131.

Optionally, before the SNA network element 131 sends the request message #2 to the sub-network SM network element 123, the SNA network element 131 obtains address information of the sub-network SM network element 123. For example, the SNA network element 131 may obtain the address information of the sub-network SM network element 123 in any one of manners 3.4 to 3.7.

The request message #2 may include one or more of the identification information of the terminal device 140, location information of the terminal device 140, identification information of the operator network 110, the information indicating the target logical zone of the terminal device, and the first tunnel information. For specific descriptions, refer to step S230. Details are not described herein again.

**S407:** The sub-network SM network element 123 determines whether to allow the terminal device 140 to access the sub-network domain 120, and sends a response message #2 to the SNA network element 131.

For example, the sub-network SM network element 123 determines, depending on whether a condition #2 is satisfied, whether to allow the terminal device 140 to access the sub-network domain 120. When the condition #2 is satisfied, the sub-network SM network element 123 determines to allow the terminal device 140 to access the sub-network domain 120, and sends the response message #2 to the SNA network element 131, where the response message #2 indicates that the establishment of the sub-network connection of the terminal device is accepted. When the condition #2 is not satisfied, the sub-network SM network element 123 determines not to allow the terminal device 140 to access the sub-network domain 120, and sends the response message #2 to the SNA network element 131, where the response message #2 indicates that the establishment of the sub-network connection of the terminal device is rejected. For a specific implementation in which the sub-network SM network element 123 determines whether the condition #2 is satisfied, refer to step S240. The response message #2 may be the first response message in the communication method 200.

When the sub-network SM network element 123 determines to allow the terminal device 140 to access the sub-network domain 120, the response message #2 may further include one or more of information indicating a logical zone that the terminal device is allowed to access, second tunnel information, and a first QoS parameter. For a specific implementation, refer to step S240.

**S408:** The SNA network element 131 sends a response message #3 to the G-SM network element 112 based on the response message #2. Accordingly, the G-SM network element 112 receives the response message #3 from the SNA network element 131.

The response message #3 may be the second response message in the communication method 200. For a specific implementation in which the SNA network element 131 sends the response message #3 to the G-SM network element 112 based on the response message #2, refer to step S250.

When the response message #3 indicates that the access of the terminal device 140 to the sub-network domain 120 is rejected, the communication method 400 further includes the following step S409.

**S409:** The G-SM network element 112 sends a connection establishment response message to the terminal device 140, where the connection establishment response message indicates that the access of the terminal device 140 to the sub-network domain 120 is rejected. Accordingly, the terminal device 140 receives the connection establishment response message from the G-SM network element 112.

For example, the G-SM network element 112 may send the connection establishment response message to the terminal device 140 via the (R)AN 111.

When the response message #3 indicates that the access of the terminal device 140 to the sub-network domain 120 is accepted, the communication method 400 further includes the following steps S410 to S412.

**S410:** The G-SM network element 112 sends a request message #3 to the (R)AN 111, where the request message #3 is for requesting the (R)AN 111 to allocate a radio resource to the sub-network connection of the terminal device 140. Accordingly, the (R)AN 111 receives the request message #3 from the G-SM network element 112.

**S411:** The (R)AN 111 sends fourth tunnel information to the G-SM network element 112.

**S412:** Establish, between the (R)AN 111 and the terminal device 140, the radio resource for the sub-network connection of the terminal device 140.

For a specific implementation of steps S410 to S412, refer to steps S260 and S270.

For beneficial effects of the communication method 400, refer to the communication method 200. Details are not described herein again.

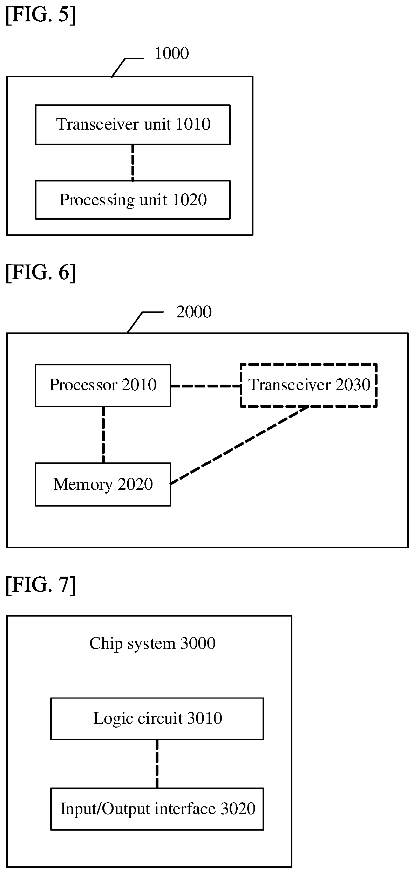

The foregoing describes in detail communication method side embodiments of this application with reference to FIG. 1 to FIG. 4. The following describes in detail communication apparatus side embodiments of this application with reference to FIG. 5 to FIG. 7. It should be understood that descriptions of the apparatus embodiments correspond to the descriptions of the method embodiments, and therefore for a part that is not described in detail, refer to the foregoing method embodiments.

In embodiments of this application, the device may be divided into functional modules based on the foregoing method examples. For example, the functional modules may be obtained through division based on corresponding functions, or two or more functions may be integrated into one processing module. The integrated module may be implemented in a form of hardware, or may be implemented in a form of a software functional module. It should be noted that, in embodiments of this application, the division into the modules is an example, and is merely logical function division. During actual implementation, another division manner may be used. Descriptions are provided below by using an example in which the functional modules are obtained through division based on the corresponding functions.

FIG. 5 is a diagram of a structure of a communication apparatus 1000 according to an embodiment of this application. As shown in FIG. 5, the apparatus 1000 may include a transceiver unit 1010 and a processing unit 1020. The transceiver unit 1010 may implement a corresponding communication function. The processing unit 1020 is configured to perform data processing. In other words, the transceiver unit 1010 is configured to perform operations related to receiving and sending. The processing unit 1020 is configured to perform an operation other than receiving and sending. The transceiver unit 1010 may also be referred to as a communication interface or a communication unit.

In a possible design, the communication apparatus 1000 may correspond to the second network element in the foregoing method embodiments or a component (for example, a chip) of the second network element.

The communication apparatus 1000 may implement the corresponding steps or procedures performed by the second network element in the foregoing method embodiments. The transceiver unit 1010 may be configured to perform operations related to receiving and sending performed by the second network element in the foregoing method embodiments, and the processing unit 1020 may be configured to perform operations related to internal processing performed by the second network element in the foregoing method embodiments.

For example, the transceiver unit 1010 is configured to receive a first request message from a first network element in a first network, where the first request message is for requesting establishment of a connection between a terminal device and a second network, the second network is for providing a service for the terminal device, and the connection between the terminal device and the second network is used by the terminal device and the second network to perform transmission of data of the service through the first network. The processing unit 1020 is configured to send a second request message to a third network element in the second network via the transceiver unit 1010 based on the first request message, where the second request message is for requesting the establishment of the connection. The transceiver unit 1010 is further configured to receive a first response message from the third network element, where the first response message indicates whether the establishment of the connection is accepted. The processing unit 1020 is further configured to send a second response message to the first network element via the transceiver unit 1010 based on the first response message, where the second response message indicates whether the establishment of the connection is accepted.

When the apparatus 1000 is configured to perform the method in FIG. 2, the transceiver unit 1010 may be configured to perform information receiving and sending steps in the method, for example, step S220, S230, S250, or S260, and the processing unit 1020 may be configured to perform an internal processing step in the method.

When the apparatus 1000 is configured to perform the method in FIG. 4, the transceiver unit 1010 may be configured to perform information receiving and sending steps in the method, for example, step S402, S404, S406, S407, or S408, and the processing unit 1020 may be configured to perform an internal processing step in the method, for example, step S403.

It should be understood that, for a specific process of performing the foregoing steps by each unit, refer to the descriptions of the foregoing embodiments. Details are not described herein again.

In another possible design, the communication apparatus 1000 may correspond to the third network element in the foregoing method embodiments or a component (for example, a chip) of the third network element.

The communication apparatus 1000 may implement the corresponding steps or procedures performed by the third network element in the foregoing method embodiments. The transceiver unit 1010 may be configured to perform operations related to receiving and sending performed by the third network element in the foregoing method embodiments, and the processing unit 1020 may be configured to perform operations related to internal processing performed by the third network element in the foregoing method embodiments.

For example, the transceiver unit 1010 is configured to receive a second request message from a second network element, where the second request message is for requesting establishment of a connection between a terminal device and a second network, the second network is for providing a service for the terminal device, and the connection between the terminal device and the second network is used by the terminal device and the second network to perform transmission of data of the service through a first network. The processing unit 1020 is configured to determine, based on the second request message and subscription data of the terminal device, whether to accept the establishment of the connection. The transceiver unit 1010 is further configured to send a first response message to the second network element, where the first response message indicates whether the establishment of the connection is accepted.

When the apparatus 1000 is configured to perform the method in FIG. 2, the transceiver unit 1010 may be configured to perform information receiving and sending steps in the method, for example, step S230 or S250, and the processing unit 1020 may be configured to perform an internal processing step in the method, for example, step S240.

When the apparatus 1000 is configured to perform the method in FIG. 4, the transceiver unit 1010 may be configured to perform information receiving and sending steps in the method, for example, step S406 or S407, and the processing unit 1020 may be configured to perform an internal processing step in the method, for example, step S407.

It should be understood that, for a specific process of performing the foregoing steps by each unit, refer to the descriptions of the foregoing embodiments. Details are not described herein again.

In another possible design, the communication apparatus 1000 may correspond to the first network element in the foregoing method embodiments or a component (for example, a chip) of the first network element.

The communication apparatus 1000 may implement the corresponding steps or procedures performed by the first network element in the foregoing method embodiments. The transceiver unit 1010 may be configured to perform operations related to receiving and sending performed by the first network element in the foregoing method embodiments, and the processing unit 1020 may be configured to perform operations related to internal processing performed by the first network element in the foregoing method embodiments.

For example, the transceiver unit 1010 is configured to receive, from a terminal device, a message for requesting establishment of a connection between the terminal device and a second network, where the second network is for providing a service for the terminal device, and the connection between the terminal device and the second network is used by the terminal device and the second network to perform transmission of data of the service through a first network. The transceiver unit 1010 is further configured to send a first request message to a second network element, where the first request message is for requesting the establishment of the connection. The transceiver unit 1010 is further configured to receive, from the second network element, a message indicating that the establishment of the connection is accepted. The transceiver unit 1010 is further configured to send a third request message to an access network device in the first network, where the third request message is for requesting to allocate a radio resource to the connection, and the radio resource is for forwarding the data of the service between the terminal device and the second network.

When the apparatus 1000 is configured to perform the method in FIG. 2, the transceiver unit 1010 may be configured to perform information receiving and sending steps in the method, for example, step S210, S220, S260, S270, or S280, and the processing unit 1020 may be configured to perform an internal processing step in the method.

When the apparatus 1000 is configured to perform the method in FIG. 4, the transceiver unit 1010 may be configured to perform information receiving and sending steps in the method, for example, step S401, S402, S404, S405, S408, S409, S410, or S411, and the processing unit 1020 may be configured to perform an internal processing step in the method.

It should be understood that, for a specific process of performing the foregoing steps by each unit, refer to the descriptions of the foregoing embodiments. Details are not described herein again.

It should be understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, the transceiver unit 1010 may alternatively be a transceiver circuit (for example, the transceiver circuit may include a receiver circuit and a transmitter circuit), and the processing unit 1020 may be a processing circuit.

The apparatus 1000 in each of the foregoing solutions has a function of implementing corresponding steps performed by the network elements (for example, the second network element, the third network element, and the first network element) in the foregoing methods. The function may be implemented by hardware, or may be implemented by hardware executing corresponding software. The hardware or the software includes one or more modules corresponding to the foregoing function. For example, a transceiver module may be replaced with a transceiver (for example, a sending unit in the transceiver module may be replaced with a transmitter, and a receiving unit in the transceiver module may be replaced with a receiver), and another unit like a processing module may be replaced with a processor, to respectively perform receiving and sending operations and a related processing operation in the method embodiments.

FIG. 6 is a diagram of another communication apparatus 2000 according to an embodiment of this application. The apparatus 2000 includes one or more processors 2010 and one or more memories 2020. The processor 2010 is configured to: execute a computer program or instructions stored in the memory 2020, or read data/signaling stored in the memory 2020, to perform the methods in the foregoing method embodiments. The memory 2020 is configured to store the computer program or the instructions and/or the data. The memory 2020 may be integrated with the processor 2010, or may be separately disposed.

Optionally, as shown in FIG. 6, the apparatus 2000 further includes a transceiver 2030, and the transceiver 2030 is configured to receive and/or send a signal. For example, the processor 2010 is configured to control the transceiver 2030 to receive and/or send the signal.

In a solution, the apparatus 2000 is configured to implement operations performed by the second network element in the foregoing method embodiments.

In another solution, the apparatus 2000 is configured to implement operations performed by the third network element in the foregoing method embodiments.

In still another solution, the apparatus 2000 is configured to implement operations performed by the first network element in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is the general-purpose processor, the DSP, the ASIC, the FPGA or the another programmable logic device, the discrete gate or the transistor logic device, or the discrete hardware component, the memory (a storage module) may be integrated into the processor. It should be further noted that the memory in this specification is intended to include, but is not limited to, these memories and any other suitable type of memory.

FIG. 7 is a diagram of a chip system 3000 according to an embodiment of this application. The chip system 3000 (which may also be referred to as a processing system) includes a logic circuit 3010 and an input/output interface (input/output interface) 1002.

The logic circuit 3010 may be a processing circuit in the chip system 3000. The logic circuit 3010 may be coupled to and connected to a storage unit, and invoke instructions in the storage unit, to cause the chip system 3000 to implement the methods and functions in embodiments of this application. The input/output interface 3020 may be an input/output circuit in the chip system 3000, and outputs information processed by the chip system 3000, or inputs to-be-processed data or signaling information into the chip system 3000 for processing.

In a solution, the chip system 3000 is configured to implement operations performed by the second network element, the third network element, or the first network element in the foregoing method embodiments. For example, the logic circuit 3010 is configured to implement operations related to internal processing performed by the second network element, the third network element, or the first network element in the foregoing method embodiments; and the input/output interface 3020 is configured to implement operations related to sending and/or receiving performed by the second network element, the third network element, or the first network element in the foregoing method embodiments.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the foregoing apparatus embodiment is merely an example. For example, the division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

An embodiment of this application further provides a communication system, including a second network element and a third network element. The second network element is configured to implement operations performed by the second network element in the foregoing method embodiments, and the third network element is configured to implement operations performed by the third network element in the foregoing method embodiments. Optionally, the communication system further includes one or more of a first network element, a fourth network element, or a fifth network element. The first network element is configured to implement operations performed by the first network element in the foregoing method embodiments, the fourth network element is configured to implement operations performed by the fourth network element in the foregoing method embodiments, and the fifth network element is configured to implement operations performed by the fifth network element in the foregoing method embodiments.

An embodiment of this application further provides a computer-readable storage medium. The computer-readable storage medium stores computer instructions for implementing the methods performed by the second network element, the third network element, or the first network element in the foregoing method embodiments. For example, when a computer program is executed by a computer, the computer is caused to implement the methods performed by the second network element, the third network element, or the first network element in the foregoing method embodiments.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a ROM, a RAM, a magnetic disk, or an optical disc.

For ease of understanding of embodiments of this application, the following several points are described.

First, in embodiments of this application, unless otherwise stated or there is a logic conflict, terms and/or descriptions in different embodiments are consistent and may be mutually referenced, and technical features in the different embodiments may be combined into a new embodiment based on an internal logical relationship thereof.

Second, in embodiments of this application, "a plurality of' means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally represents an "or" relationship between associated objects.

Third, in embodiments of this application, "first", "second", and various numerical numbers (for example, #1 and #2) indicate differentiation for ease of description, and are not intended to limit the scope of embodiments of this application, for example, are intended to distinguish between different messages but not to describe a specific order or sequence. It should be understood that objects described in such a way are interchangeable in an appropriate case, so that a solution other than embodiments of this application can be described.

Fourth, in embodiments of this application, descriptions such as "when ...", "in a case of ...", and "if" all mean that a device performs corresponding processing in an objective case, and are not intended to limit time, and the device is not required to perform a determining action during implementation. This does not mean that there is another limitation either.

Fifth, in embodiments of this application, the terms "include", "have" and any variant thereof are intended to cover non-exclusive inclusion. For example, a process, method, system, product, or device that includes a list of steps or units is not necessarily limited to those steps or units that are expressly listed, but may include other steps or units that are not expressly listed or inherent to the process, method, product, or device.

Sixth, in embodiments of this application, "indicate" may include "directly indicate" and "indirectly indicate". When a piece of indication information indicates A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same, or may be different. A specific sending method is not limited in this application.

The "indication information" in embodiments of this application may be an explicit indication, to be specific, direct indication is performed by using signaling, or obtaining is implemented based on a parameter indicated by signaling in combination with another rule or another parameter or through deduction; or may be an implicit indication, to be specific, obtaining is implemented based on a rule, a relationship, or another parameter or through deduction. This is not specifically limited in this application.

Seventh, in embodiments of this application, "storage" may mean storage in one or more memories. The one or more memories may be separately disposed, or may be integrated into an encoder or a decoder, a processor, or a communication apparatus. Alternatively, a part of the one or more memories may be separately disposed, and a part of the one or more memories may be integrated into a decoder, a processor, or a communication apparatus. A type of the memory may be a storage medium in any form. This is not limited in this application.

Eighth, in embodiments of this application, "communication" may alternatively be described as "data transmission", "information transmission", "data processing", or the like. The "transmission" includes "sending" and "receiving". This is not limited in this application.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a second network element and comprising:
receiving a first request message from a first network element in a first network,
wherein the first request message is for requesting establishment of a connection between a terminal device and a second network, the second network is for providing a service for the terminal device, and the connection between the terminal device and the second network is used by the terminal device and the second network to perform transmission of data of the service through the first network;
sending a second request message to a third network element in the second network based on the first request message, wherein the second request message is for requesting the establishment of the connection;
receiving a first response message from the third network element, wherein the first response message indicates whether the establishment of the connection is accepted;
and
sending a second response message to the first network element based on the first response message, wherein the second response message indicates whether the establishment of the connection is accepted.

2. The method according to claim 1, wherein the first request message comprises identification information of the terminal device, and the sending the second request message to the third network element in the second network based on the first request message comprises:
when user information of the second network comprises the identification information of the terminal device, sending the second request message to the third network element, wherein
the user information of the second network comprises identification information of one or more terminal devices allowed to establish a connection with the second network.

3. The method according to claim 2, wherein when the user information of the second network comprises the identification information of the terminal device, the method further comprises:
obtaining subscription data of the second network.

4. The method according to any one of claims 1 to 3, wherein the sending the second request message to the third network element in the second network based on the first request message comprises:
when the first request message and the subscription data of the second network satisfy a first condition, sending the second request message to the third network element,
wherein the first condition comprises one or two of the following conditions:
(1) when the first request message comprises identification information of the first network, and the subscription data of the second network comprises identification information of one or more networks, the identification information of the one or more networks comprises the identification information of the first network; and
(2) when the first request message comprises information indicating a location of the terminal device, and the subscription data of the second network comprises a service range of the second network, the service range of the second network comprises the location of the terminal device.

5. The method according to any one of claims 1 to 4, wherein before the sending the second request message to the third network element in the second network based on the first request message, the method further comprises:
obtaining a quantity of terminal devices that have accessed the second network; and
determining that the quantity of terminal devices that have accessed the second network is less than a maximum quantity of terminal devices allowed to simultaneously access the second network.

6. The method according to claim 5, wherein when the quantity of terminal devices that have accessed the second network is less than the maximum quantity of terminal devices allowed to simultaneously access the second network, the method further comprises:
sending, to a fourth network element, a message for requesting to update the quantity of terminal devices that have accessed the second network, wherein the fourth network element is configured to maintain the quantity of terminal devices that have accessed the second network.

7. The method according to claim 6, wherein before the sending the second request message to the third network element in the second network based on the first request message, the method further comprises:
determining that the quantity of terminal devices that have accessed the second network is successfully updated.

8. The method according to any one of claims 1 to 7, wherein the second response message comprises a quality of service parameter of the connection, and the quality of service parameter of the connection is determined based on at least one of the following: a quality of service parameter of the terminal device or a quality of service parameter of the second network.

9. The method according to claim 8, wherein the first response message comprises the quality of service parameter of the terminal device, and the subscription data of the second network comprises the quality of service parameter of the second network; and
when the quality of service parameter of the terminal device and the quality of service parameter of the second network satisfy a second condition, the quality of service parameter of the connection is the quality of service parameter of the terminal device; or
when the quality of service parameter of the terminal device and the quality of service parameter of the second network do not satisfy a second condition, the quality of service parameter of the connection is the quality of service parameter of the second network, wherein
the second condition comprises one or two of the following conditions:
a quality of service level in the quality of service parameter of the terminal device is less than or equal to a quality of service level in the quality of service parameter of the second network; and
a maximum bandwidth in the quality of service parameter of the terminal device is less than or equal to a maximum bandwidth in the quality of service parameter of the second network.

10. The method according to any one of claims 1 to 9, wherein the second response message comprises a charging identifier, the charging identifier indicates to charge a radio resource in the first network, and the radio resource in the first network is for forwarding service data for the second network.

11. A communication method, applied to a third network element in a second network and comprising:
receiving a second request message from a second network element, wherein the second request message is for requesting establishment of a connection between a terminal device and the second network, the second network is for providing a service for the terminal device, and the connection between the terminal device and the second network is used by the terminal device and the second network to perform transmission of data of the service through a first network;
determining, based on the second request message and subscription data of the terminal device, whether to accept the establishment of the connection; and
sending a first response message to the second network element, wherein the first response message indicates whether the establishment of the connection is accepted.

12. The method according to claim 11, wherein the subscription data of the terminal device is subscription data created when the terminal device subscribes to the second network, or the subscription data of the terminal device is default subscription data.

13. The method according to claim 11 or 12, wherein the determining, based on the second request message and the subscription data of the terminal device, whether to accept the establishment of the connection comprises:
when the second request message and the subscription data of the terminal device satisfy a third condition, determining to accept the establishment of the connection;
or
when the second request message and the subscription data of the terminal device do not satisfy a third condition, determining not to accept the establishment of the connection, wherein
the third condition comprises one or two of the following conditions:
(1) when the second request message comprises information indicating a location of the terminal device, and the subscription data of the terminal device comprises information indicating one or more geographic areas that the terminal device is allowed to access, the one or more geographic areas that the terminal device is allowed to access comprise the location of the terminal device; and
(2) when the second request message comprises information indicating a logical zone that the terminal device requests to access, and the subscription data of the terminal device comprises information indicating one or more logical zones that the terminal device is allowed to access, the one or more logical zones that the terminal device is allowed to access comprise the logical zone that the terminal device requests to access.

14. The method according to any one of claims 11 to 13, wherein the first response message indicates that the establishment of the connection is accepted; and before the sending the first response message to the second network element, the method further comprises:
determining that authentication does not need to be performed on the terminal device.

15. The method according to claim 14, wherein the determining that the authentication does not need to be performed on the terminal device comprises:
when one or two of the following conditions are satisfied, determining that the authentication does not need to be performed on the terminal device:
the subscription data of the terminal device comprises information indicating that the authentication does not need to be performed on the terminal device; or
the second request message comprises identification information allocated by the first network to the terminal device, and the identification information is trusted.

16. The method according to any one of claims 11 to 15, wherein the first response message indicates that the establishment of the connection is accepted; and before the sending the first response message to the second network element, the method further comprises:
successfully authenticating the terminal device.

17. The method according to claim 16, wherein the subscription data of the terminal device comprises authentication information of the terminal device, and the successfully authenticating the terminal device comprises:
successfully authenticating the terminal device by using the authentication information.

18. The method according to any one of claims 11 to 17, wherein the first response message comprises a quality of service parameter of the terminal device, and the quality of service parameter of the terminal device is for determining a quality of service parameter of the connection.

19. The method according to any one of claims 11 to 18, wherein before the determining, based on the second request message and the subscription data of the terminal device, whether to accept the establishment of the connection, the method further comprises:
sending, to a fifth network element in the second network, a message for requesting the subscription data of the terminal device, wherein the fifth network element is configured to manage subscription data of a terminal device that subscribes to the second network; and
receiving the subscription data from the fifth network element.

20. A communication method, applied to a first network element in a first network, wherein the method comprises:
receiving, from a terminal device, a message for requesting establishment of a connection between the terminal device and a second network, wherein the second network is for providing a service for the terminal device, and the connection between the terminal device and the second network is used by the terminal device and the second network to perform transmission of data of the service through the first network;
sending a first request message to a second network element, wherein the first request message is for requesting the establishment of the connection;
receiving, from the second network element, a message indicating that the establishment of the connection is accepted; and
sending a third request message to an access network device in the first network, wherein the third request message is for requesting to allocate a radio resource to the connection, and the radio resource is for forwarding the data of the service between the terminal device and the second network.

21. The method according to claim 20, wherein before the sending the first request message to the second network element, the method further comprises:
obtaining address information of the second network element; and
the sending the first request message to the second network element comprises:
sending the first request message to the second network element based on the address information of the second network element.

22. The method according to claim 20 or 21, wherein the third request message comprises a quality of service parameter corresponding to the connection, and the quality of service parameter is determined based on a quality of service parameter of the terminal device and/or a quality of service parameter of the second network.

23. The method according to any one of claims 20 to 22, wherein the third request message comprises radio resource information, and the radio resource information is for determining the radio resource.

24. The method according to any one of claims 20 to 23, wherein the first request message comprises first tunnel information, and the first tunnel information is for sending downlink data of the service to a first user plane network element in the first network.

25. The method according to claim 24, wherein before the sending the first request message to the second network element, the method further comprises:
sending, to the first user plane network element, indication information indicating the first user plane network element to allocate downlink tunnel information to the connection; and
receiving the first tunnel information from the first user plane network element.

26. The method according to any one of claims 20 to 25, wherein the third request message comprises third tunnel information, and the third tunnel information is for sending uplink data of the service to a first user plane network element in the first network.

27. The method according to claim 26, wherein before the sending the third request message to the access network device in the first network, the method further comprises:
sending, to the first user plane network element, indication information indicating the first user plane network element to allocate uplink tunnel information to the connection; and
receiving the third tunnel information from the first user plane network element.

28. The method according to any one of claims 20 to 27, wherein the method further comprises:
receiving fourth tunnel information from the access network device, wherein the fourth tunnel information is for sending downlink data of the service to the access network device.

29. The method according to claim 28, wherein the third request message comprises indication information indicating the access network device to allocate tunnel information to the connection; and
the receiving the fourth tunnel information from the access network device comprises:
receiving, from the access network device, a message for responding to the third request message, wherein the message comprises the fourth tunnel information.

30. A communication apparatus, comprising one or more functional units, wherein the one or more functional units are configured to perform the method according to any one of claims 1 to 10, the one or more functional units are configured to perform the method according to any one of claims 11 to 19, or the one or more functional units are configured to perform the method according to any one of claims 20 to 29.

31. A communication apparatus, comprising a processor, wherein the processor is coupled to a memory; and the processor is configured to execute a computer program stored in the memory, to cause the apparatus to perform the method according to any one of claims 1 to 10, to cause the apparatus to perform the method according to any one of claims 11 to 19, or to cause the apparatus to perform the method according to any one of claims 20 to 29.

32. A computer-readable storage medium, wherein the computer-readable storage medium stores a computer program; and when the computer program is run on a computer, the computer is caused to perform the method according to any one of claims 1 to 10, the computer is caused to perform the method according to any one of claims 11 to 19, or the computer is caused to perform the method according to any one of claims 20 to 29.

33. A communication system, comprising a second network element and a third network element, wherein the second network element is configured to perform the method according to any one of claims 1 to 10, and the third network element is configured to perform the method according to any one of claims 11 to 19.

34. The system according to claim 33, wherein the system further comprises a first network element, and the first network element is configured to perform the method according to any one of claims 20 to 29.

35. A communication method, comprising:
receiving, by a second network element, a first request message from a first network element in a first network, wherein the first request message is for requesting establishment of a connection between a terminal device and a second network, the second network is for providing a service for the terminal device, and the connection between the terminal device and the second network is used by the terminal device and the second network to perform transmission of data of the service through the first network;
sending, by the second network element, a second request message to a third network element in the second network based on the first request message, wherein the second request message is for requesting the establishment of the connection;
receiving, by the third network element, the second request message from the second network element, and determining, based on the second request message and subscription data of the terminal device, whether to accept the establishment of the connection;
sending, by the third network element, a first response message to the second network element, wherein the first response message indicates whether the establishment of the connection is accepted; and
receiving, by the second network element, the first response message from the third network element, and sending a second response message to the first network element based on the first response message, wherein the second response message indicates whether the establishment of the connection is accepted.

36. The method according to claim 35, wherein the first request message comprises identification information of the terminal device, and sending, by the second network element, the second request message to the third network element in the second network based on the first request message comprises:
when user information of the second network comprises the identification information of the terminal device, sending, by the second network element, the second request message to the third network element, wherein
the user information of the second network comprises identification information of one or more terminal devices allowed to establish a connection with the second network.

37. The method according to claim 35 or 36, wherein sending, by the second network element, the second request message to the third network element in the second network based on the first request message comprises:
when the first request message and subscription data of the second network satisfy a first condition, sending, by the second network element, the second request message to the third network element, wherein the first condition comprises one or two of the following conditions:
(1) when the first request message comprises identification information of the first network, and the subscription data of the second network comprises identification information of one or more networks, the identification information of the one or more networks comprises the identification information of the first network; and
(2) when the first request message comprises information indicating a location of the terminal device, and the subscription data of the second network comprises a service range of the second network, the service range of the second network comprises the location of the terminal device.

38. The method according to any one of claims 35 to 37, wherein before sending, by the second network element, the second request message to the third network element in the second network based on the first request message, the method further comprises:
obtaining, by the second network element, a quantity of terminal devices that have accessed the second network; and
determining, by the second network element, that the quantity of terminal devices that have accessed the second network is less than a maximum quantity of terminal devices allowed to simultaneously access the second network.

39. The method according to any one of claims 35 to 38, wherein the second response message comprises a quality of service parameter of the connection, and the quality of service parameter of the connection is determined based on at least one of the following: a quality of service parameter of the terminal device and a quality of service parameter of the second network.

40. The method according to any one of claims 35 to 39, wherein determining, by the third network element based on the second request message and the subscription data of the terminal device, whether to accept the establishment of the connection comprises:
when the second request message and the subscription data of the terminal device satisfy a third condition, determining, by the third network element, to accept the establishment of the connection; or
when the second request message and the subscription data of the terminal device do not satisfy a third condition, determining, by the third network element, not to accept the establishment of the connection, wherein
the third condition comprises one or two of the following conditions:
(1) when the second request message comprises information indicating the location of the terminal device, and the subscription data of the terminal device comprises information indicating one or more geographic areas that the terminal device is allowed to access, the one or more geographic areas that the terminal device is allowed to access comprise the location of the terminal device; and
(2) when the second request message comprises information indicating a logical zone that the terminal device requests to access, and the subscription data of the terminal device comprises information indicating one or more logical zones that the terminal device is allowed to access, the one or more logical zones that the terminal device is allowed to access comprise the logical zone that the terminal device requests to access.

41. The method according to any one of claims 35 to 40, wherein the first response message indicates that the establishment of the connection is accepted; and before sending, by the third network element, the first response message to the second network element, the method further comprises:
determining, by the third network element, that authentication does not need to be performed on the terminal device, or successfully authenticating, by the third network element, the terminal device.

42. The method according to any one of claims 35 to 41, wherein the method further comprises:
receiving, by the first network element from the terminal device, a message for requesting the establishment of the connection between the terminal device and the second network;
sending, by the first network element, the first request message to the second network element;
receiving, by the first network element, the second response message from the second network element; and
when the second response message indicates that the establishment of the connection is accepted, sending, by the first network element, a third request message to an access network device in the first network, wherein the third request message is for requesting to allocate a radio resource to the connection, and the radio resource is for forwarding the data of the service between the terminal device and the second network.
